# EUROPEAN PATENT APPLICATION

(11) **EP 4 668 109 A1**
(43) Date of publication of application: **24.12.2025**
(21) Application number: 24838357.2
(22) Date of filing: 22.03.2024
(51) Int. Cl.: G06F 9/451, G06F 3/0481

(54) **APPLICATION SCREEN DISPLAY METHOD AND APPARATUS, AND ELECTRONIC DEVICE**

(30) Priority: 12.07.2023 CN 202310862682
(71) Applicant: Honor Device Co., Ltd., Shenzhen, Guangdong 518040 (CN)
(72) Inventor: WANG, Yuchen, Shenzhen, Guangdong 518040 (CN); SUN, Li, Shenzhen, Guangdong 518040 (CN); XUE, Ailin, Shenzhen, Guangdong 518040 (CN); WANG, Yan, Shenzhen, Guangdong 518040 (CN)
(74) Representative: Goddar, Heinz J.
(86) International application number: PCT/CN2024/083302
(87) International publication number: WO 2025/011097

(57) **Abstract**

This application provides an application picture display method and apparatus, and an electronic device. The method includes: The electronic device displays a first window in response to a first operation performed by a user, and displays a first picture of a first application in the first window, where the first picture is obtained by rendering, the first window has a preset first aspect ratio, the first aspect ratio is a ratio of a width to a height of a visible region of the first window, and the first window is a window in a split-screen mode or a window in a floating window mode. displaying, by the electronic device, the first window at a second aspect ratio in response to an adjustment operation performed by the user on the first window, determining, from the first picture, a target picture having the second aspect ratio, and displaying the target picture in the first window, where the second aspect ratio is different from the first aspect ratio. This application may resolve a problem of phenomena such as picture stretching and picture compression as a result of a user adjusting a window display ratio in some scenes.

## Description

This application claims priority to Chinese Patent Application No. 202310862682.6, filed with the China National Intellectual Property Administration on July 12, 2023 and entitled "APPLICATION PICTURE DISPLAY METHOD AND APPARATUS AND ELECTRONIC DEVICE", which is incorporated herein by reference in its entirety.

### TECHNICAL FIELD

This application relates to the field of terminal technologies, and in particular, to an application picture display method and apparatus and an electronic device.

### BACKGROUND

With the popularity and development of the Internet, users have more diverse functional requirements for electronic devices. For example, to satisfy a usage requirement of a user for a plurality of applications in a same time period, an electronic device provides a plurality of display modes such as displaying different applications in a floating window mode and displaying different applications in a split-screen mode. In this way, the electronic device may support simultaneous display of a plurality of applications on a display screen, thereby implementing multi-tasking to improve use efficiency of the user for the application.

However, in a process of displaying a plurality of windows by the electronic device in the foregoing form, when the user adjusts a display ratio of a window, phenomena such as picture stretching and picture compression may occur, which affects user experience.

### SUMMARY

Embodiments of this application provide an application picture display method and apparatus and an electronic device, to resolve a problem of phenomena such as picture stretching and picture compression as a result of a user adjusting a window display ratio in some scenes.

According to a first aspect, an embodiment of this application provides an application picture display method, applied to an electronic device, including: The electronic device displays a first window in response to a first operation performed by a user, and displays a first picture of a first application in the first window, where the first picture is obtained by rendering, the first window has a preset first aspect ratio, the first aspect ratio is a ratio of a width to a height of a visible region of the first window, and the first window is a window in a split-screen mode or a window in a floating window mode. The electronic device displays the first window at a second aspect ratio in response to an adjustment operation performed by the user on the first window, determines, from the first picture, a target picture having the second aspect ratio, and displays the target picture in the first window, where the second aspect ratio is different from the first aspect ratio.

According to the application picture display method in an embodiment of this application, when the electronic device displays the first window in the split-screen mode or displays the first window in the floating window mode, the problem of phenomena such as picture stretching and picture compression that occur when a user adjusts a window display ratio may be resolved.

In an implementation, that the electronic device displays the first window at a second aspect ratio in response to an adjustment operation performed by the user on the first window, determines, from the first picture, a target picture corresponding to the second aspect ratio, and displays the target picture in the first window includes: The electronic device displays the first window at the second aspect ratio in response to an adjustment operation performed by the user on the first aspect ratio, and intercepts a first instruction sent by the first application to a graphics library libEGL, where the libEGL is located in a system library of the electronic device, the first instruction is used to instruct the electronic device to stretch or compress the first picture, so that the first picture has the second aspect ratio, and the second aspect ratio is different from the first aspect ratio. The electronic device corrects the first instruction, to generate a correction instruction, where the correction instruction is used to instruct the electronic device to intercept the target picture from the first picture at the second aspect ratio. The electronic device controls the libEGL to execute the correction instruction. The electronic device displays the target picture in the first window. Through this implementation, the electronic device may intercept the first instruction sent by the first application to the libEGL, to avoid a change of a ratio of the first picture.

In an implementation, that the electronic device displays the first window in response to the first operation performed by the user, and displays the first picture of the first application in the first window includes: The electronic device recognizes a current scene of a foreground page in response to the first operation performed by the user. The electronic device displays the first window and a second window in the split-screen mode if the current scene is a split-screen scene, displays the first picture of the first application in the first window, and displays a second picture of a second application in the second window. Through this implementation, the electronic device may recognize that the current scene is a split-screen scene, and resolve the problem of phenomena such as picture stretching and picture compression that occur in the scene.

In an implementation, the first application is a game application, and the second application is any one of a game application, a social application, a music application, a video application, a communication application, a productivity application, a news application, a reading application, a health application, an education application, and a tool application. Through this implementation, the electronic device may avoid the phenomena of picture stretching and picture compression occurring in both the applications during screen splitting of the two game applications, and may further avoid the phenomena of picture stretching and picture compression occurring in the game application during screen splitting of a game application and a non-game application. In an implementation, when the first application is the game application, and the second application is a non-game application, the second picture is not obtained by rendering. That the electronic device displays the first window at the second aspect ratio in response to the adjustment operation performed by the user on the first window includes: The electronic device adjusts an aspect ratio of the second window in response to the adjustment operation performed by the user on the first window, so that the second window has a target aspect ratio, and the aspect ratio of the second picture is the same as the target aspect ratio. Through this implementation, the electronic device may not change the display ratio of the second picture in the second window when changing the aspect ratio of the first window. In other words, for a non-game application, the phenomena of picture stretching and picture compression do not occur in a split-screen scene of the electronic device.

In an implementation, that the electronic device recognizes the current scene of the foreground page includes: The electronic device calls a package manager service PMS to determine a first package name of the first application and a second package name of the second application. The electronic device determines a first running state of the first application based on the first package name, and determines a second running state of the second application based on the second package name, where a running state is used to determine whether an application is in a foreground running state or a background running state. The electronic device calls a window manager service WMS to determine a first window size of the first window and a second window size of the second window if the first running state is the foreground running state and the second running state is the foreground running state. The electronic device determines that the current scene is the split-screen scene if the electronic device determines that a sum of the first window size and the second window size is equal to a preset first threshold. Through this implementation, a specific manner in which the electronic device recognizes the current scene is shown. In this way, the electronic device may recognize that the current scene is a split-screen scene, and resolve the problem of phenomena such as picture stretching and picture compression that occur in the scene.

In an implementation, a framework layer of the electronic device includes a rendering instruction interception module and a first function pointer list, the first function pointer list includes a first function pointer, the first function pointer points to the rendering instruction interception module, the first function pointer is used to enable the rendering instruction interception module to intercept a first instruction, and the first instruction is one of open graphics library OpenGL instructions. That the electronic device displays the first window at the second aspect ratio in response to the adjustment operation performed by the user on the first aspect ratio, and intercepts the first instruction sent by the first application to the libEGL includes: The electronic device controls the first application to send the first instruction to the first function pointer if the electronic device determines that the current scene is the split-screen scene. The electronic device controls the rendering instruction interception module to intercept the first instruction. Through this implementation, the electronic device resolves the problem of phenomena such as picture stretching and picture compression occurring in the split-screen scene by intercepting and modifying the rendering instruction.

In an implementation, that the electronic device displays the first window at the second aspect ratio in response to the adjustment operation performed by the user on the first aspect ratio, and intercepts the first instruction sent by the first application includes: The electronic device display the first window at the second aspect ratio in response to the adjustment operation performed by the user on the first aspect ratio, displays the second window at a third aspect ratio, intercepts the first instruction sent by the first application, and intercepts a second instruction sent by the second application, where the second instruction is one of the OpenGL instructions. Through this implementation, if the second application is the same type of application as the first application, and the problem of phenomena such as picture stretching and picture compression also exists, the electronic device can simultaneously resolve the problem of phenomena such as picture stretching and picture compression that occur in two windows.

In an implementation, the first function pointer list includes a first graphics context glContext function and a second glContext function, the first glContext function corresponds to the first function pointer, the second glContext function corresponds to the second function pointer, and the second function pointer is used to enable the rendering instruction interception module to intercept the second instruction. That the electronic device intercepts the first instruction sent by the first application and intercepts the second instruction sent by the second application includes: The electronic device controls the first application to send the first instruction to the first function pointer and controls the second application to send the second instruction to the second function pointer if the electronic device determines that the current scene is the split-screen scene. The electronic device activates the first glContext function to call the first function pointer, and activates the second glContext function to call the second function pointer. The electronic device controls the rendering instruction interception module to intercept the first instruction and the second instruction. Through this implementation, the electronic device can distinguish between different rendering instructions, so as to perform different operations for different windows. In this way, the electronic device can simultaneously resolve the problem of phenomena such as picture stretching and picture compression that occur in two windows.

In an implementation, the framework layer of the electronic device further includes a window monitoring module and a rendering ratio calibration module. Before the electronic device corrects the first instruction, the method further includes: The window monitoring module obtains the first window size from the WMS based on registration callback or periodic query. The window monitoring module sends the first window size to the rendering ratio calibration module. Through this implementation, a specific manner in which the electronic device corrects the first instruction by obtaining the first window size is shown. In this way, the electronic device can resolve the problem of phenomena such as picture stretching and picture compression that occur in the split-screen scene.

In an implementation, before the electronic device corrects the first instruction, the method further includes: The rendering instruction interception module sends the first instruction to the rendering ratio calibration module. Through this implementation, a specific manner in which the electronic device intercepts and sends the first instruction to correct the first instruction is shown. In this way, the electronic device can resolve the problem of phenomena such as picture stretching and picture compression that occur in the split-screen scene.

In an implementation, the first instruction includes a viewport glViewport function instruction and a cropping glScissor function instruction, the glViewport function instruction is used to enable the first picture to have the second aspect ratio, and the glScissor function instruction is used to crop the first picture at the second aspect ratio. Before the electronic device corrects the first instruction, the method further includes: The electronic device obtains the second aspect ratio in the glViewport function instruction. The electronic device determines whether the first aspect ratio is the same as the second aspect ratio. The electronic device performs the step of correcting the first instruction if the first aspect ratio is different from the second aspect ratio. Through this implementation, the electronic device calibrates a current display ratio of the first picture, to determine whether the first instruction needs to be corrected.

In an implementation, that the electronic device corrects the first instruction includes: The rendering ratio calibration module determines the second aspect ratio based on the first window size. The rendering ratio calibration module intercepts a first region in the first picture at the second aspect ratio. The rendering ratio calibration module corrects the glViewport function instruction and the glScissor function instruction, where the corrected glViewport function instruction is used to enable the first region to have the second aspect ratio, and the corrected glScissor function instruction is used to crop the first region at the second aspect ratio. Through this implementation, a specific manner in which the electronic device corrects the first instruction is shown, to resolve the problem of phenomena such as picture stretching and picture compression occurring in the split-screen scene.

According to a second aspect, this application provides an electronic device, including: a processor, a memory, and a touch screen. The memory stores a program instruction. When the program instruction is executed by the processor, the electronic device is enabled to perform the application picture display method according to any one of the implementations of the foregoing first aspect.

According to a third aspect, this application further provides a computer-readable storage medium. The computer-readable storage medium stores an instruction. When the instruction is run on an electronic device, the electronic device is enabled to perform the application picture display method according to any one of the implementations of the first aspect.

According to a fourth aspect, this application further provides a computer program product. When the computer program product is run on an electronic device, the electronic device is enabled to perform the application picture display method according to any one of the implementations of the first aspect.

It may be understood that the electronic device of the second aspect, the computer storage medium of the third aspect, and the computer program product of the fourth aspect provided above are all configured to perform the corresponding method provided above. Therefore, for beneficial effects that can be achieved through the method, reference may be made to the beneficial effect of the corresponding method provided above. Details are not described herein again.

### BRIEF DESCRIPTION OF DRAWINGS

FIG. 1 is a schematic diagram of a first scene in which an electronic device displays an application in a floating window mode;
FIG. 2 is a schematic diagram of a second scene in which an electronic device displays an application in a floating window mode;
FIG. 3 is a schematic diagram of a floating window mode of an electronic device;
FIG. 4 is a schematic diagram of a first scene in which an electronic device displays an application in a split-screen mode;
FIG. 5 is a schematic diagram of a second scene in which an electronic device displays an application in a split-screen mode;
FIG. 6 is a schematic diagram of a split-screen mode of an electronic device;
FIG. 7 is a schematic diagram of a first scene in which an electronic device adjusts a window display ratio during screen splitting;
FIG. 8 is a schematic diagram of a second scene in which an electronic device adjusts a window display ratio during screen splitting;
FIG. 9 is a schematic diagram of a hardware structure of an electronic device according to an embodiment of this application;
FIG. 10 is a block diagram of a software structure of an electronic device according to an embodiment of this application;
FIG. 11 is a first schematic flowchart of an application picture display method according to an embodiment of this application;
FIG. 12 is a second schematic flowchart of an application picture display method according to an embodiment of this application;
FIG. 13 is a schematic diagram of module interaction of an application picture display method according to an embodiment of this application;
FIG. 14 is a schematic diagram of flow interaction of an application picture display method according to an embodiment of this application;
FIG. 15 is a third schematic flowchart of an application picture display method according to an embodiment of this application;
FIG. 16 is a schematic diagram of a conventional rendering process of an electronic device;
FIG. 17 is a schematic diagram of a rendering process of an electronic device according to an embodiment of this application;
FIG. 18 is a schematic diagram of a first picture correction scene according to an embodiment of this application;
FIG. 19 is a first schematic interaction diagram of an application picture display method according to an embodiment of this application;
FIG. 20 is a second schematic interaction diagram of an application picture display method according to an embodiment of this application;
FIG. 21 is a third schematic interaction diagram of an application picture display method according to an embodiment of this application; and
FIG. 22 is a schematic structural diagram of an application picture display apparatus according to an embodiment of this application.

### DESCRIPTION OF EMBODIMENTS

Technical solutions in embodiments of this application are clearly described below with reference to accompanying drawings in embodiments of this application. Apparently, the described embodiments are some rather than all of embodiments of this application. Other embodiments obtained by a person skilled in the art based on embodiments of this application without creative efforts shall fall within the protection scope of this application.

Terms "first", "second", "third", and the like in the specification and claims of this application are used to distinguish between different objects rather than to limit a specific order. In the description of this application, unless otherwise stated, "at least one" means one, two, and more than two.

In embodiments of this application, a term such as "in an example" or "for example" is used to represent giving an example, an illustration, or a description. Any embodiment or design scheme described as "in an example" or "for example" in embodiments of this application should not be explained as being more preferred or advantageous over another embodiment or design scheme. Exactly, use of the term such as "in an example" or "for example" is intended to present a related concept in a specific manner.

Terms used in implementations of this application are only used for explaining specific embodiments of this application, but are not intended to limit this application. Embodiments of this application are described in detail below with reference to the accompanying drawings.

With the popularity and development of the Internet, users have more diverse functional requirements for electronic devices. For example, to satisfy a usage requirement of a user for a plurality of applications in a same time period, an electronic device provides a plurality of display modes such as displaying different applications in a floating window mode and displaying different applications in a split-screen mode. In this way, the electronic device may support simultaneous display of a plurality of applications on a display screen, thereby implementing multi-tasking to improve use efficiency of the user for the application.

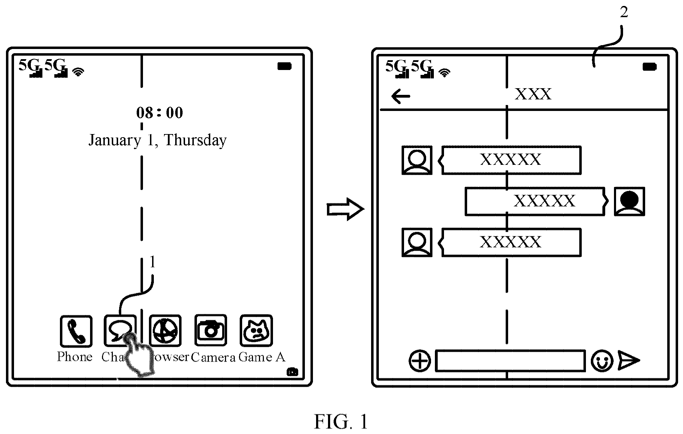

FIG. 1 is a schematic diagram of a first scene in which an electronic device displays an application in a floating window mode.

As shown in FIG. 1, for example, the electronic device is a foldable screen mobile phone or a tablet computer. In response to a user tapping a first icon 1, the electronic device starts a first application, and displays a first application window 2 corresponding to the first application. The electronic device may display the first application window 2 in a full-screen form.

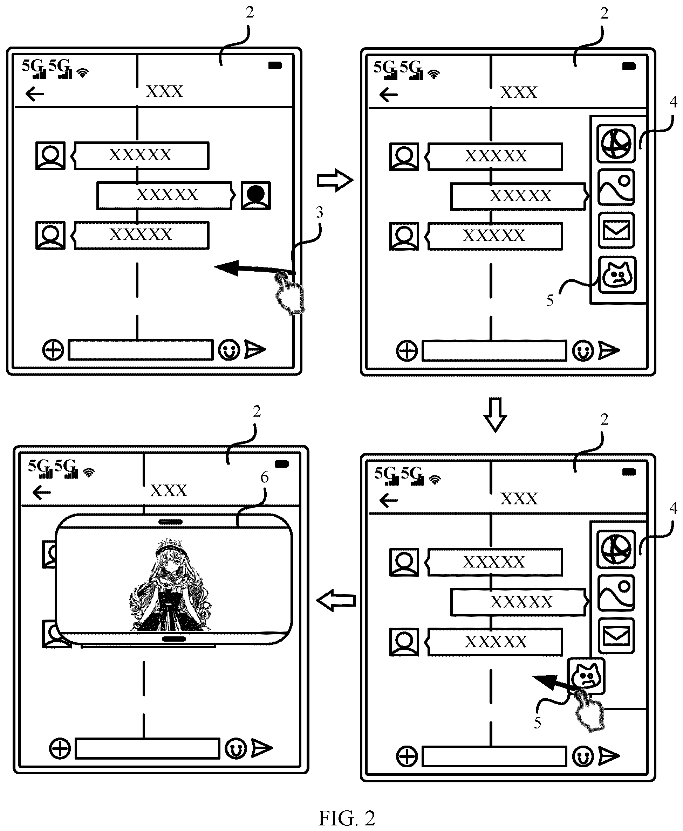

FIG. 2 is a schematic diagram of a second scene in which an electronic device displays an application in a floating window mode.

As shown in FIG. 2, for example, in response to a left swipe operation performed by user on a first screen edge 3, the electronic device displays an application bar 4. The application bar 4 may include a second icon 5. In response to an operation of dragging the second icon 5 toward the first application window 2 by the user, the electronic device starts a second application, and displays a second application window 6 corresponding to the second application above a partial region of the first application window 2 in a suspended manner in a floating window mode.

The applications include a plurality of types, for example: a video application, a game application, and a browser application. Depending on different types of the applications, directions of floating windows displayed by the electronic device are different.

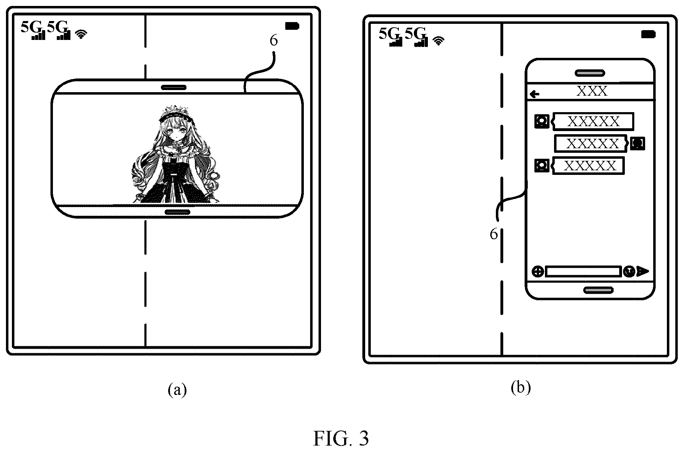

FIG. 3 is a schematic diagram of a floating window mode of an electronic device.

As shown in (a) of FIG. 3, the electronic device includes a horizontally displayed floating window. For example, when a second application is a game application, the electronic device horizontally displays a second application window 6.

As shown in (b) of FIG. 3, the electronic device includes a vertically displayed floating window. For example, when the second application is a chat application, the electronic device vertically displays the second application window 6.

In this way, different applications display floating windows in more adaptive directions, which can enhance user experience.

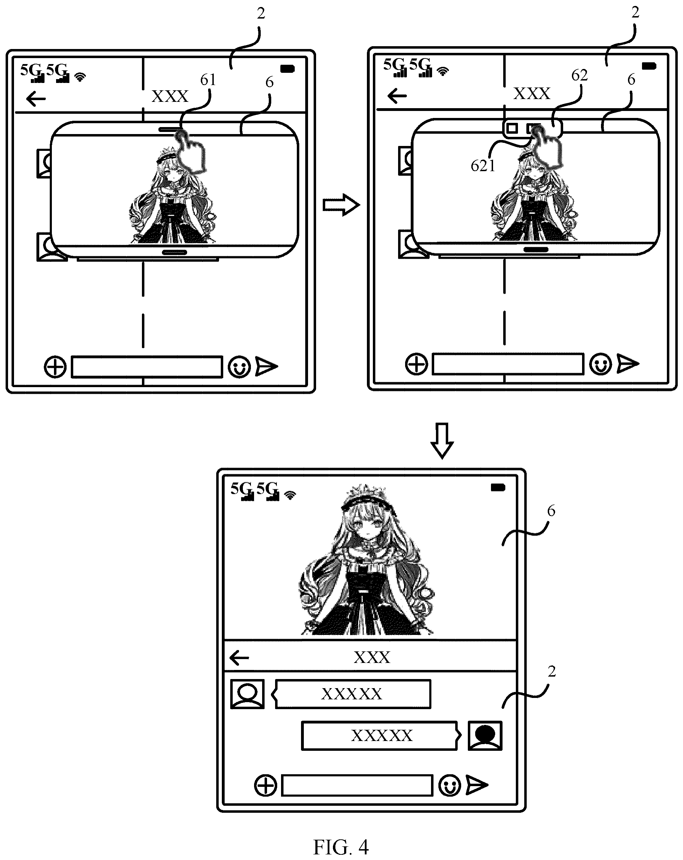

FIG. 4 is a schematic diagram of a first scene in which an electronic device displays an application in a split-screen mode.

As shown in FIG. 4, a top region of a second application window 6 includes a first floating button (Bar) 61. In response to a tapping operation performed by a user on the first floating button 61, the electronic device displays a first capsule element 62. The first capsule element 62 includes a first split-screen button 621. In response to a tapping operation performed by the user on the first split-screen button 621, the electronic device displays a first application window 2 and a second application window 6 in the split-screen mode.

When the electronic device changes from a floating window mode to a split-screen mode, the first application window 2 changes from a full-screen mode to the split-screen mode, and the second application window 6 changes from the floating window mode to the split-screen mode. In addition, the electronic device displays the first application window 2 with a default first window size, and displays the second application window 6 with a default second window size. A window size may be specified in pixels. For example, the window size may be 800×600, which indicates that a width is 800 pixels and a height is 600 pixels.

The electronic device may further implement the split-screen function in another operation manner.

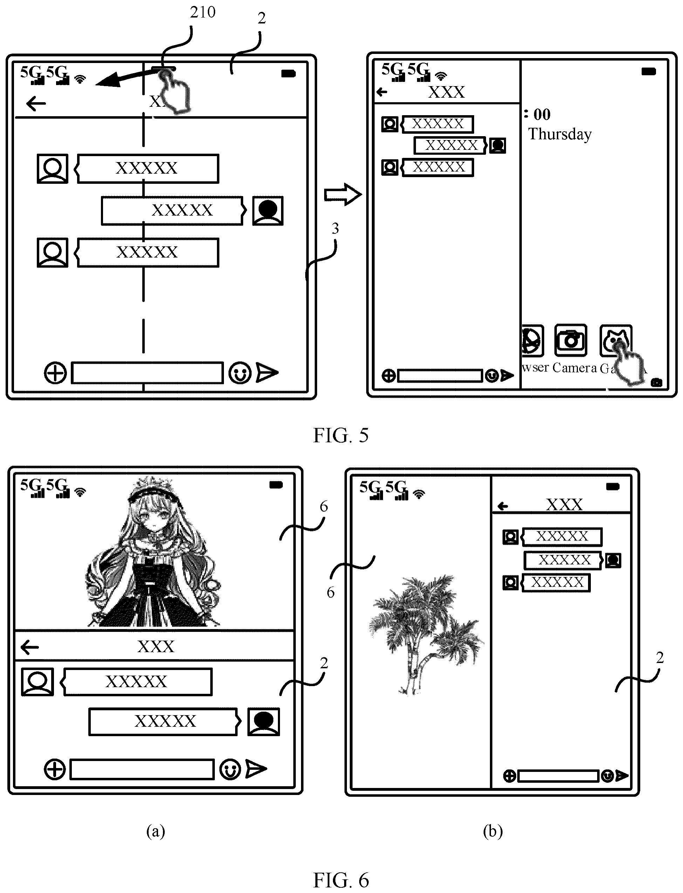

FIG. 5 is a schematic diagram of a second scene in which an electronic device displays an application in a split-screen mode.

As shown in FIG. 5, when the electronic device displays a first application window 2 in a full-screen mode, a top region of the first application window 2 includes a second floating button 210. In response to a leftward dragging operation performed by a user on the second floating button 210, the electronic device displays the first application window 2 in a split-screen mode. In this case, the user may start a second application in a region of a display screen of the electronic device that is not covered by the first application window 2. A specific operation manner in which the electronic device implements the split-screen function is not limited in embodiments of this application.

FIG. 6 is a schematic diagram of a split-screen mode of an electronic device.

As shown in (a) of FIG. 6, the electronic device supports a top-bottom split-screen mode. For example, when a user splits a screen between a game application and a chat application, the electronic device may display the game application and the chat application in the top-bottom split-screen mode. Displaying any application on the top or on the bottom may be determined based on an application type or an operation mode of a user. This is not limited in embodiments of this application.

As shown in (b) of FIG. 6, the electronic device further supports a left-right split-screen mode. When a user splits a screen between a short video application and a chat application, the electronic device may display the short video application and the chat application in the left-right split-screen mode. Displaying any application on the left or right may be determined based on an application type or an operation mode of a user. This is not limited in embodiments of this application. In this way, screen splitting is performed for different applications in a more adaptive manner, which can enhance user experience.

Therefore, the electronic device simultaneously displays the first application window 2 and the second application window 6, so that the user can implement multi-tasking.

When the electronic device displays an application in a floating window mode or displays an application in a split-screen mode, a function of adjusting a window display ratio is provided.

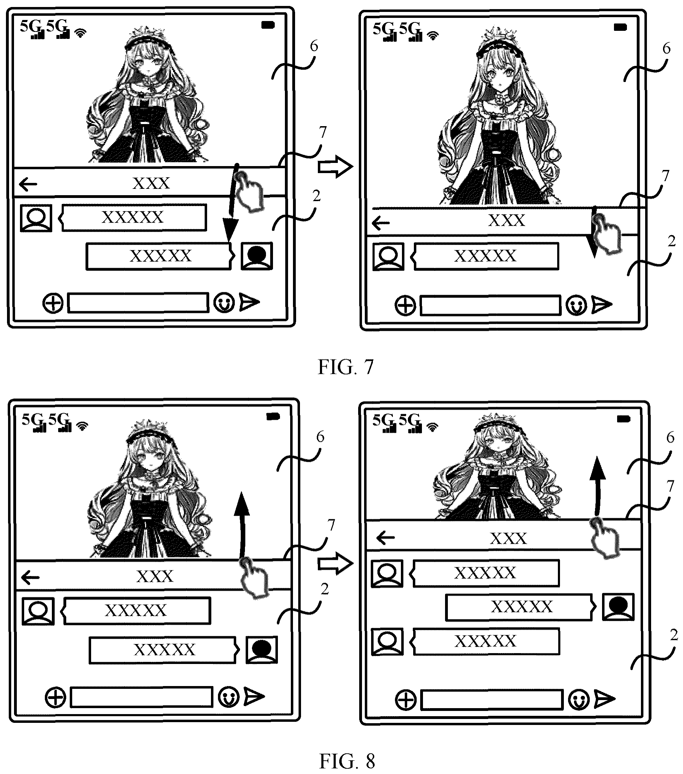

FIG. 7 is a schematic diagram of a first scene in which an electronic device adjusts a window display ratio during screen splitting.

As shown in FIG. 7, when the electronic device displays a first application window 2 and a second application window 6 in a top-bottom split-screen mode, the electronic device displays a first split-screen boundary 7 between the first application window 2 and the second application window 6. In response to a dragging operation performed by a user on the first split-screen boundary 7, the electronic device may change a first window size of the first application window 2 and change a second window size of the second application window 6.

In this way, since the second window size changes, a picture ratio of a display picture in the second application window 6 may be abnormal.

In response to a downward dragging operation performed by the user on the first split-screen boundary 7, the electronic device zooms in to display the second application window 6, and adjusts an initial display ratio of a first display picture displayed in the second application window 6, so that the first display picture is displayed at a first display ratio. In this way, a phenomenon of picture stretching occurs in the first display picture.

FIG. 8 is a schematic diagram of a second scene in which an electronic device adjusts a window display ratio during screen splitting.

As shown in FIG. 8, in response to an upward dragging operation performed by a user on a first split-screen boundary 7, the electronic device zooms out to display the second application window 6, and adjusts an initial display ratio of a first display picture displayed in the second application window 6, so that the first display picture is displayed at a second display ratio. In this way, a phenomenon of picture compression occurs in the first display picture.

It needs to be noted herein that for different types of applications, a display picture of a game application is usually obtained by rendering each picture frame. Therefore, the foregoing phenomena of picture stretching and compression usually occur. However, the foregoing phenomena of picture stretching and compression usually do not occur in a display picture of a video application due to a limitation of a video format. In other words, in a game scene, a problem that the foregoing electronic device displays an abnormal display picture usually occurs. Such a problem may also occur in another rendering scene similar to the game scene. A specific scene involved is not limited in embodiments of this application.

In addition, when the second application window 6 changes from a full-screen mode to a split-screen mode, and is displayed in a default second window size, an initial display ratio of the first display picture enables a user to have a normal visual perception. Only after the user adjusts the second window size, a problem of abnormal display of a picture occurs in the electronic device.

Correspondingly, during adjustment of the window display ratio of the floating window by the electronic device, similar phenomena of picture stretching and compression may also occur. When the second application window 6 changes from the full-screen mode to the floating screen mode, the initial display ratio of the first display picture also enables the user to have a normal visual perception. After the user adjusts a window size of a floating window, the problem of abnormal display of a picture occurs in the electronic device. In embodiments of this application, for embodiments in which the electronic device displays the second application window 6 in a split-screen mode or a floating window mode, reference may be made to each other. Only a case of abnormal picture display occurring when the electronic device displays the second application window 6 in a split-screen mode is described through an example in this application.

Specifically, an example in which a second application is a game application is used. In response to a screen splitting operation performed by a user, when running the game application in the second application window 6, the electronic device renders at least one picture frame in the game application and displays a rendered picture. The second application window 6 has a second window size.

When the electronic device stars to render each picture frame, a viewport (Viewport) needs to be set, to determine a display location and size of a rendering result on a display screen. During specific implementation, the electronic device may call a glViewport function to initialize a size of the Viewport. The glViewport function is a function in an open graphics library (Open Graphics Library, OpenGL), which is used to set a location and a size of a Viewport. The Viewport defines a visible region of a target window or a framebuffer rendered by the OpenGL. In this case, the size of the Viewport matches the second window size.

When the electronic device finishes rendering each picture frame, the electronic device calls a glScissor function to crop a rectangular region in the Viewport that matches the second window size. The glScissor function is a function in the OpenGL, which is used to define a rectangular region. Pixels in the rectangular region are retained, and pixels outside the region are cropped. In this way, when the electronic device changes the second application window 6 from the full-screen mode to the split-screen mode, the size of the Viewport is the same as the size of the rectangular region, a picture rendered in the rectangular region is displayed at an initial display ratio, and a user has a normal visual perception.

For example, the size of Viewport is 1620 × 922, the size of the rectangular region is 1620×922, and the first display picture is displayed at a normal display ratio.

In response to an upward dragging operation performed by the user on the first split-screen boundary 7, during zooming in to display the second application window 6 by the electronic device, when the electronic device starts to render each picture frame, the size of the Viewport is set to match the second window size.

When the electronic device finishes rendering each picture frame, sine the second window size changes, the size of the rectangular region defined by the glScissor function is equal to the changed second window size. In this way, the size of the Viewport is different from the size of the rectangular region, a picture rendered in the rectangular region is displayed at the first display ratio, and a phenomenon of picture stretching occurs in the first display picture.

For example, the size of Viewport is 1620×922, the size of the rectangular region is 1579 × 1094, and the first display picture is displayed at a display ratio shown in FIG. 7.

Similarly, when a downward dragging operation is performed by the user on the first split-screen boundary 7, a phenomenon of picture compression occurs on the first display picture, and the first display picture is displayed at a display ratio shown in FIG. 8. Details are not described in embodiments of this application.

To resolve a problem that during the display of an application in a floating window mode or display of an application in a split-screen mode by the electronic device, the adjustment of the window display ratio causes the phenomena such as picture stretching and picture compression, an embodiment of this application provides an application picture display method.

The application picture display method provided in this embodiment of this application may be applied to various types of electronic devices that support game applications. The electronic device includes but is not limited to a mobile phone, a tablet computer, a personal computer, a workstation device, a large-screen device (such as a smart screen or a smart television), a wearable device (such as a smart bracelet or a smart watch), a handheld game console, a home game console, a virtual reality device, an augmented reality device, a mixed reality device, an on-board smart terminal, or the like.

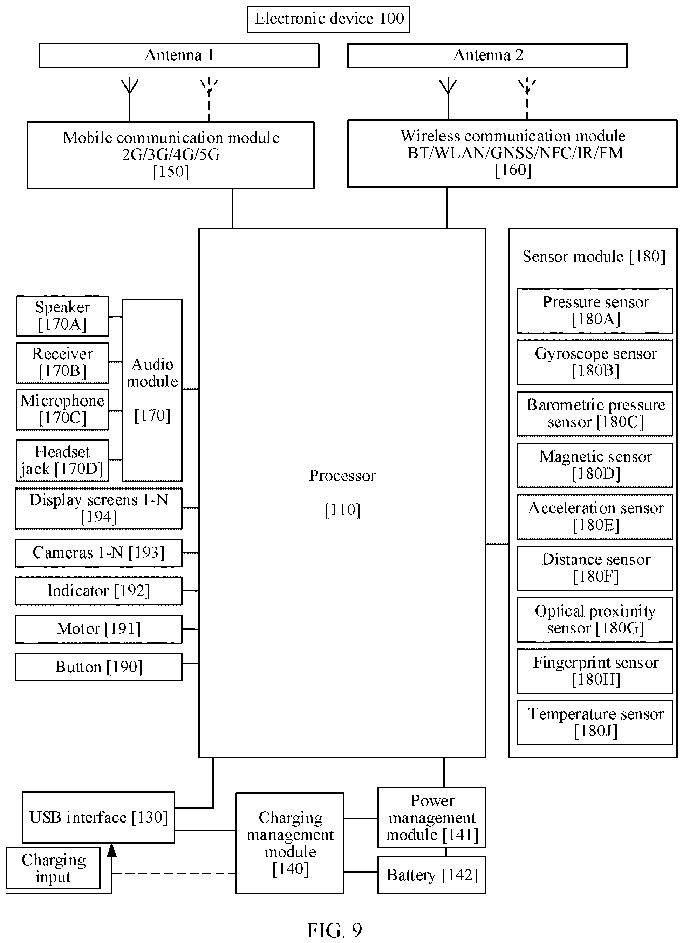

FIG. 9 is a schematic diagram of a hardware structure of an electronic device according to an embodiment of this application.

As shown in FIG. 9, an electronic device 100 may include a processor 110, a memory 120A, a universal serial bus (universal serial bus, USB) interface 130, a charging management module 140, a power management module 141, a battery 142, an antenna 01, an antenna 02, a mobile communication module 150, a wireless communication module 160, an audio module 170, a speaker 170A, a receiver 170B, a microphone 170C, a headset jack 170D, a sensor module 180, a button 190, a motor 191, a camera 192, a display screen 193, a subscriber identity module (subscriber identification module, SIM) card interface 194, and the like. The sensor module 180 may include a touch sensor 180A, a gyroscope sensor 180B, a barometric pressure sensor 180C, a geomagnetic sensor 180D, an acceleration sensor 180E, a distance sensor 180F, an optical proximity sensor 180G, a fingerprint sensor 180H, a temperature sensor 180J, and the like. The gyroscope sensor 180B, the barometric pressure sensor 180C, the geomagnetic sensor 180D, the acceleration sensor 180E, and the like may all be configured to detect a motion state of the electronic device, and therefore may also be referred to as motion sensors.

It may be understood that an example structure in this embodiment of this application does not constitute a specific limitation on the electronic device 100. In some other embodiments of this application, the electronic device 100 may include more or fewer components than those shown in the figure, or some merged components, or some split components, or different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural network processing unit (neural-network processing unit, NPU), and/or the like. Different processing units may be independent devices, or may be integrated into one or more processors.

The memory 120A may be configured to store computer-executable program code. The executable program code includes an instruction. The memory 120A may include a program storage region and a data storage region. The program storage region may store an operating system, an application program required by at least one function (for example, a sound playback function or an image playback function), and the like. The data storage region may store data (for example, audio data and an address book) and the like created during use of the electronic device 100. In addition, the memory 120A may include a high-speed random access memory, and may further include a non-volatile memory, for example, at least one magnetic disk storage device, a flash memory device, or a universal flash storage (universal flash storage, UFS). The processor 110 runs the instructions stored in the memory 120A, and/or the instructions stored in the memory arranged in the processor, to perform various function applications and data processing of the electronic device 100.

The USB interface 130 is an interface that complies with the USB standard specification, and may be specifically a Mini USB interface, a Micro USB interface, a USB Type C interface, and the like. The USB interface 130 may be configured to connect to a charger to charge the electronic device 100, or may be configured to perform data transmission between the electronic device 100 and the peripheral device. The interface may alternatively be configured to connect to a headset to play audio through the headset. The interface may further be configured to connect to another electronic device such as an AR device.

It may be understood that a schematic interface connection relationship between the modules in embodiments of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger.

The power management module 141 is configured to connect to the battery 142, the charging management module 140, and the processor 110. The power management module 141 receives an input of the battery 142 and/or the charging management module 140, to supply power to the processor 110, the memory 120A, the display screen 193, the camera 192, the wireless communication module 160, and the like.

A wireless communication function of the electronic device 100 may be implemented through the antenna 01, the antenna 02, the mobile communication module 150, the wireless communication module 160, the modem processor, the baseband processor, and the like.

The antenna 01 and the antenna 02 are configured to transmit and receive an electromagnetic wave signal.

The mobile communication module 150 may provide a solution to wireless communication including 2G/3G/4G/5G and the like applied to the electronic device 100.

The modem processor may include a modulator and a demodulator.

The wireless communication module 160 may provide a solution to wireless communication including a wireless local area network (wireless local area networks, WLAN) (for example, a wireless fidelity (wireless fidelity, Wi-Fi) network), bluetooth (bluetooth, BT), a global navigation satellite system (global navigation satellite system, GNSS), frequency modulation (frequency modulation, FM), near field communication (near field communication, NFC), an infrared (infrared, IR) technology, and the like applied to the electronic device 100.

The electronic device 100 implements a display function through the GPU, the display screen 193, the application processor, and the like. The GPU is a microprocessor for image processing, and is connected to the display screen 193 and the application processor. The GPU is configured to perform mathematical and geometric calculation, and is configured to perform graphics rendering. The processor 110 may include one or more GPUs, and is configured to execute program instructions to generate or change display information.

The display screen 193 is configured to display an image, a video, or the like. The display screen 193 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), and the like. In some embodiments, the electronic device 100 may include 1 or N display screens 193. N is a positive integer greater than 1.

The electronic device 100 may implement a photographing function through the ISP, the camera 192, the video codec, the GPU, the display screen 193, the application processor, and the like.

The ISP is configured to process data fed back by the camera 192.

The camera 192 is configured to capture a static image or a video.

The electronic device 100 may implement an audio function such as music playback or recording through the audio module 170, the speaker 170A, the receiver 170B, the microphone 170C, the headset jack 170D, the application processor, and the like.

The touch sensor 180A is also referred to as a "touch control device". The touch sensor 180A may be arranged on the display screen 193. The touch sensor 180A and the display screen 193 form a touch screen, which is also referred to as a "touch screen". The touch sensor 180A is configured to detect a touch operation performed on or near the touch sensor. The touch sensor may transfer the detected touch operation to the application processor to determine a touch event type. A visual output related to the touch operation may be provided through the display screen 193. In some other embodiments, the touch sensor 180A may also be arranged on a surface of the electronic device 100 at a position different from that of the display screen 193.

The gyroscope sensor 180B may be configured to determine a movement posture of the electronic device 100.

The barometric pressure sensor 180C is configured to measure an air pressure.

The geomagnetic sensor 180D includes a Hall sensor.

The acceleration sensor 180E may detect a magnitude of acceleration of the electronic device 100 in each direction (generally three axes).

The distance sensor 180F is configured to measure a distance.

The optical proximity sensor 180G is configured to determine whether an object exists near the electronic device 100.

The fingerprint sensor 180H is configured to collect a fingerprint.

The temperature sensor 180J is configured to detect a temperature.

The button 190 includes a power button, a volume button, and the like.

The motor 191 may generate a vibration prompt.

The SIM card interface 194 is configured to connect a SIM card.

A software system of the electronic device 100 may use a layered architecture, an event-driven architecture, a microkernel architecture, a microservice architecture, or a cloud architecture. In this embodiment of this application, the software structure of the electronic device 100 is described through examples by using an Android system with a layered architecture as an example.

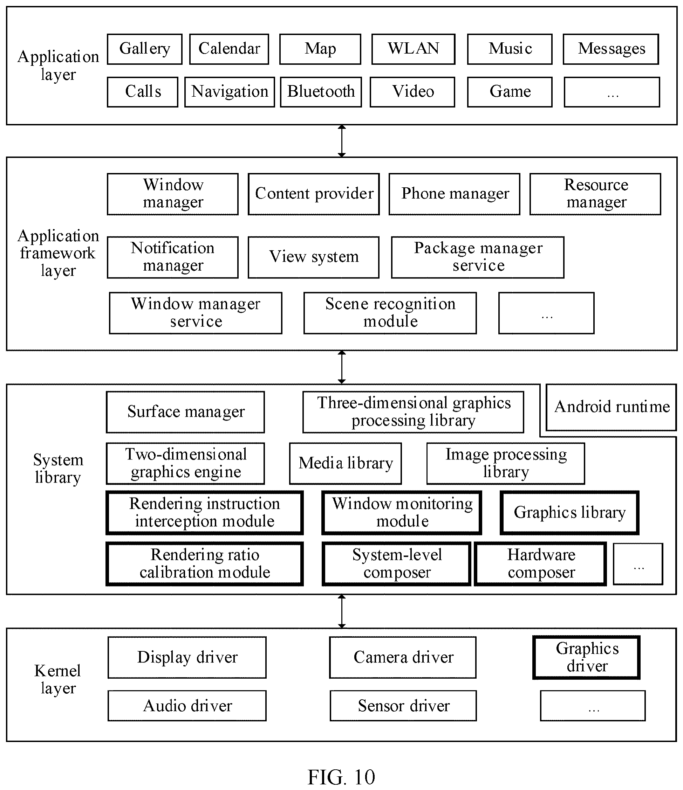

FIG. 10 is a block diagram of a software structure of an electronic device according to an embodiment of this application.

In the layered architecture, software is divided into several layers, and each layer has a clear role and division of labor. The layers communicate with each other through a software interface. In some embodiments, the Android system is divided into four layers, which are an application layer, an application framework layer, an Android runtime (Android runtime) and system library, and a kernel layer from top to bottom.

The application layer may include a series of application packages.

As shown in FIG. 10, the application packages may include applications such as battery management, camera, gallery, calendar, phone, map, navigation, music, video, messages, and games.

The application framework layer provides an application interface (application programming interface, API) and a programming framework for applications at the application layer. The application framework layer includes some predefined functions.

As shown in FIG. 10, the application framework layer may include a window manager, an input manager InputManager, a sensor manager SensorManager, a phone manager, a resource manager, a notification manager, and the like.

The input manager may be configured to monitor an input event of a user, for example, a click event or a sliding event performed by a finger of the user on the display screen 193 of the electronic device 100. By monitoring the input event, the electronic device 100 may determine whether the electronic device is being used.

The sensor manager is configured to monitor data returned by each sensor in the electronic device, for example, motion sensor data, optical proximity sensor data, and temperature sensor data. The electronic device may determine, through the data returned by each sensor, whether jitter occurs, whether the display screen 193 is occluded, or the like.

Further, the application framework layer includes a scene recognition module, configured to recognize a multi-window scene of the foreground page, for example, a split-screen scene. Specifically, the scene recognition module may perform scene recognition through information provided by a package manager service (PackageManagerService, PMS) and a window manager service (WindowManagerService, WMS) of the application framework layer.

The Android Runtime includes a core library and a virtual machine. The Android runtime is responsible for scheduling and managing the Android system.

The core library includes two parts: one part is a performance function that the Java language needs to call, and the other part is a core library of Android.

The application layer and the application framework layer are run in the virtual machine. The virtual machine executes Java files of the application layer and the application framework layer as binary files. The virtual machine is configured to execute functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem, and provide fusion of 2D layers and 3D layers for a plurality of applications.

The media library supports playback and recording in a plurality of common audio and video formats, static image files, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

Further, the system library further includes a rendering instruction interception module, a window monitoring module, a rendering ratio calibration module, and the like. The rendering instruction interception module is configured to intercept a rendering instruction sent by an application, the window monitoring module is configured to monitor and respond to a window event, and the rendering ratio calibration module is configured to calibrate a ratio of a rendered picture.

The system library further includes a graphics library (Embedded-System Graphics Library, libEGL), and the libEGL provides an interface for graphics rendering and display in an embedded system. In addition, the application may send an instruction to the libEGL, so that the libEGL adjusts a picture displayed by the application based on the instruction of the application, such as stretching and compressing the picture.

The system library further includes a system-level composer (SurfaceFlinger). The SurfaceFlinger is configured to manage and compose a graphical interface of an application, and display the graphical interface on a display screen of a device. For example, the application may provide image data to the SurfaceFlinger. After receiving the image data from the application, the SurfaceFlinger may put the image data into a to-be-processed queue. The SurfaceFlinger may traverse the to-be-processed queue in a specific order, and perform image composition based on an attribute of each piece of image data. After the image composition is completed, the SurfaceFlinger may send the composited image to a hardware display channel, and the channel transmits the image to a screen for display.

The system library further includes a hardware composer (Hardware Composer, HWC), which is configured to perform graphics composition and display operations, and can interact with an underlying hardware driver, to implement efficient graphic display and rendering. For example, the hardware composer may receive image data from an application, a system UI, and another input source, and these data exist in a form of a layer (Layer). Each layer includes a framebuffer or texture, which are composited in a specific order. The hardware composer may sort the layer based on an attribute and a priority of each layer, to ensure a correct stacking order. In addition, the hardware composer further performs a cropping operation, to discard image data beyond a screen boundary, thereby improving rendering efficiency. The hardware composer may further perform a series of image mixing operations, such as transparency mixing and color mixing. In addition, the hardware composer may further perform operations such as position transformation, scaling, and rotation on the layer, to adapt to different display requirements. The hardware composer may further compose the sorted, cropped, and transformed image data of each layer into one or more framebuffers. The hardware composer may further output composited image data to a display device, and usually send an image to a display screen for display through a video controller (Display Controller).

The kernel layer is a layer between hardware and software. The kernel layer includes at least a display driver, a camera driver, an audio driver, a sensor driver, and a graphics driver (Graphics Driver).

The graphics driver may be configured to manage and control a graphics processing unit (Graphics Processing Unit, GPU) in a computer system, and a graphics function and a display device related to the graphics processing unit.

It may be understood that an example structure in this embodiment of this application does not constitute a specific limitation on the electronic device 100. In some other embodiments of this application, the electronic device may include more or fewer components than those shown in the figure, or some merged components, or some split components, or different component arrangements. The components shown in the figure may be implemented by hardware, software, or a combination of software and hardware.

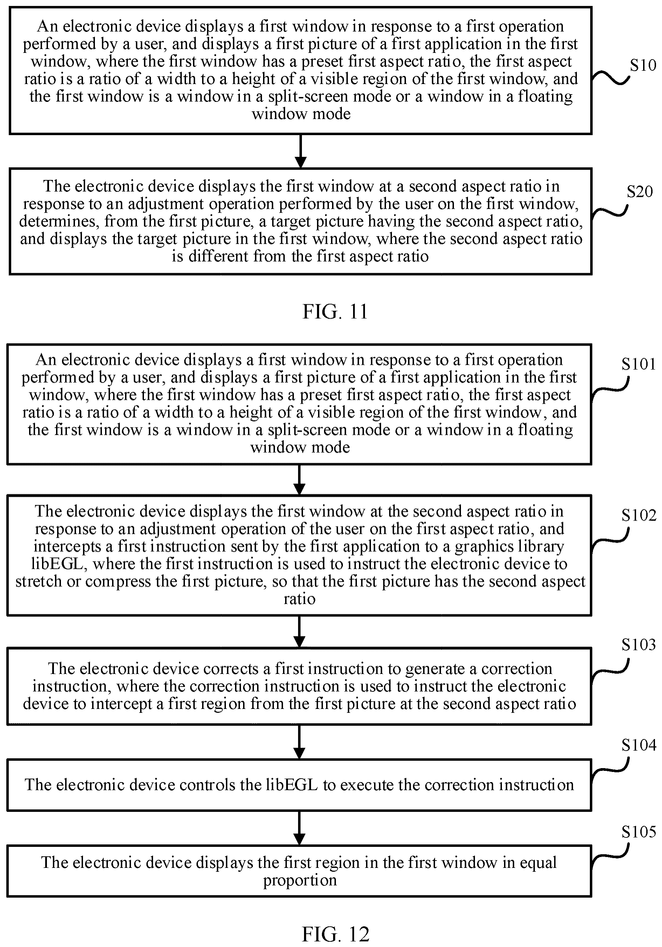

FIG. 11 is a first schematic flowchart of an application picture display method according to an embodiment of this application.

As shown in FIG. 11, the application picture display method includes steps S10-S20.

Step S10: The electronic device displays a first window in response to a first operation performed by a user, and displays a first picture of a first application in the first window.

The first picture is obtained by rendering, the first window has a preset first aspect ratio, the first aspect ratio is a ratio of a width to a height of a visible region of the first window, and the first window is a window in a split-screen mode or a window in a floating window mode.

Step S20: The electronic device displays the first window at a second aspect ratio in response to an adjustment operation performed by the user on the first window, determines, from the first picture, a target picture having the second aspect ratio, and displays the target picture in the first window, where the second aspect ratio is different from the first aspect ratio.

According to the application picture display method in an embodiment of this application, when the electronic device displays the first window in the split-screen mode or displays the first window in the floating window mode, a problem of phenomena such as picture stretching and picture compression that occur when a user adjusts a window display ratio may be resolved.

FIG. 12 is a second schematic flowchart of an application picture display method according to an embodiment of this application.

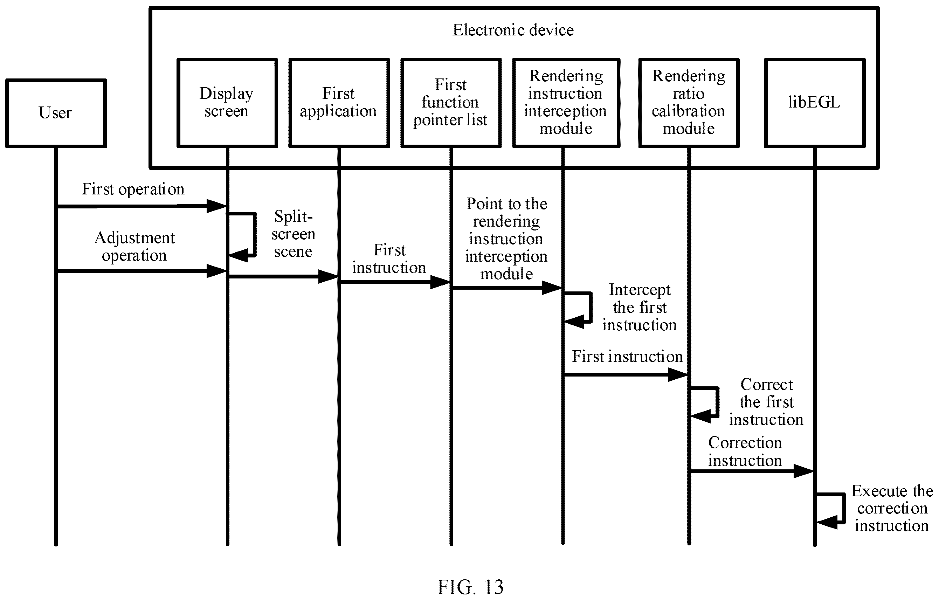

FIG. 13 is a schematic diagram of module interaction of an application picture display method according to an embodiment of this application.

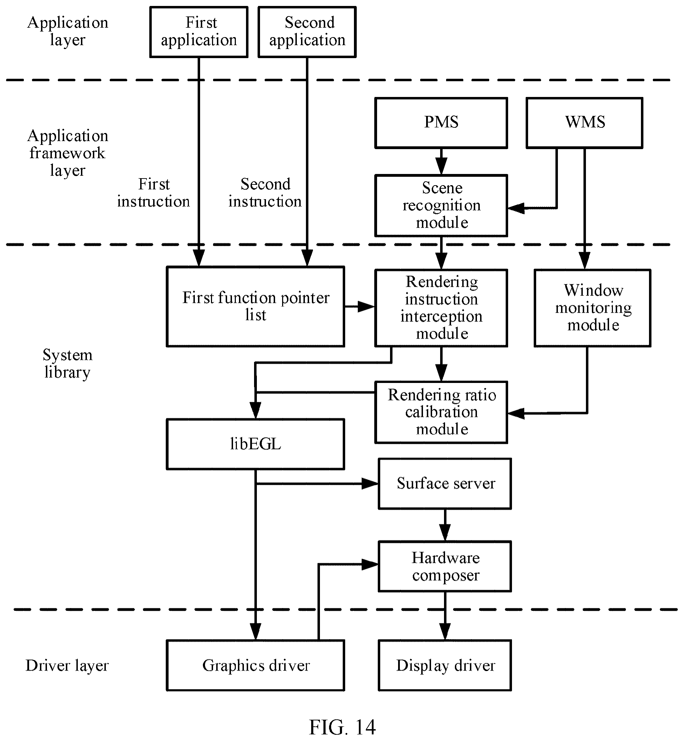

FIG. 14 is a schematic diagram of flow interaction of an application picture display method according to an embodiment of this application.

As shown in FIG. 12, FIG. 13, and FIG. 14, the application picture display method may specifically include steps S101-S105.

Step S101: An electronic device displays a first window in response to a first operation performed by a user, and displays a first picture of a first application in the first window.

The first window is a window in a split-screen mode or a window in a floating window mode.

Since the first window is the window in the split-screen mode or the window in the floating window mode, the electronic device usually further displays another window on a page on which the first window is located. In other words, step S101 includes: The electronic device displays a first window and a second window on a first page in response to the first operation performed by the user, displays the first picture of the first application in the first window, and displays a second picture of a second application in the second window.

The first application may be a game application. The second application may be a game application, or may be a non-game application, for example: any one of a social application, a music application, a video application, a communication application, a productivity application, a news application, a reading application, a health application, an education application, and a tool application. The first application may also be another type of application having a rendering manner the same as the game application. A specific type of the application is not limited in embodiments of this application. In this way, through embodiments of this application, a problem of picture stretching and picture compression as a result of a user adjusting a display ratio of a game application window may be resolved when an electronic device displays a plurality of windows and at least one window displays a game application.

The first operation is used to enable the electronic device to display the first window in the split-screen mode or display the first window in the floating window mode.

Specifically, the first operation includes the following operations.

Further, as shown in FIG. 2, an example in which the first operation is used to enable the electronic device to display the first window in the floating window mode is used. The first operation may include: an operation of sliding a first screen edge 3 to the left by the user, and an operation of dragging a second icon 5 to a first application window 2 (which may be regarded as the first window) by the user. In this way, the electronic device may display the first window in the floating window mode.

Further, as shown in FIG. 4, an example in which the first operation is used to enable the electronic device to display the first window in the split-screen mode is used. The first operation may include: a click operation performed by the user on a first floating button 61, and a click operation performed by the user on a first split-screen button 621. In this way, the electronic device may display the first window and the second window in the split-screen mode.

Further, as shown in FIG. 5, an example in which the first operation is used to enable the electronic device to display the first window in the split-screen mode is used. The first operation may include: a leftward dragging operation or a rightward dragging operation performed by a user on the second floating button 210. In this way, the electronic device may display the first window in the split-screen mode.

The first operation may further include another operation manner. A specific form of the first operation is not limited in embodiments of this application.

The first window has a preset first aspect ratio. For example, the first aspect ratio is 1620: 922. The aspect ratio (Aspect Ratio) refers to a proportional relationship between a width and a height. In an image, a video, a display screen, and a window, an aspect ratio is a commonly used concept for describing a size ratio. The first aspect ratio is a ratio of a width to a height of a visible region of the first window. In this way, when the electronic device displays the first window, a first window size of the first window is certain. For example, the first window size is 1620×922. A second window size of the corresponding second window is also certain. 1620 means that a width of the first window is 1620 pixels, and 922 means that a height of the first window is 922 pixels.

When the first window is a window in a split-screen mode, a sum of the first window size of the first window and a second window size of the second window is equal to a size of a display region of a display screen. When the first window is a window in the floating screen mode, the second window is usually displayed in a full-screen mode, and the first window usually covers a partial region of the second window. Although the first window has a preset first aspect ratio in the split-screen mode or in the floating window mode, the preset first aspect ratios respectively corresponding to the two modes are different.

In addition, since the first window size and the second window size are certain, when the electronic device starts to render each picture frame during display of the first picture, a size of Viewport initialized through a glViewport function is set based on the first window size, and the first picture is cropped through a glScissor function based on the first window size. In this way, after the first operation, the first picture and the second picture have a normal display ratio.

Step S102: The electronic device displays a first window 14 at a second aspect ratio in response to an adjustment operation performed by the user on the first aspect ratio, and intercepts a first instruction sent by the first application to a libEGL.

The adjustment operation is used to enable the electronic device to adjust a display ratio of the first window and a display ratio of the second window.

An example in which the first window is a window in a floating window mode is used. The adjustment operation may include: an operation manner such as a dragging operation performed by the user on a left edge of the first window, a dragging operation performed by the user on a right edge of the first window, a dragging operation performed by the user on a lower left corner of the first window, or a dragging operation performed by the user on a lower right corner of the first window.

Further, as shown in FIG. 7, an example in which the first window is a window in a split-screen mode is used. The adjustment operation may further include: a downward dragging operation performed by the user on a first split-screen boundary. In this way, the electronic device may zoom in the first window for display.

Further, as shown in FIG. 8, an example in which the first window is a window in a split-screen mode is used. The adjustment operation may further include: an upward dragging operation performed by the user on the first split-screen boundary. In this way, the electronic device may zoom out the first window for display.

The adjustment operation may further include another operation manner. A specific form of the adjustment operation is not limited in embodiments of this application. It needs to be noted herein that when the electronic device adjusts the aspect ratio of the first window, an aspect ratio of the second window is also correspondingly adjusted. If the first application is a game application and the second application is also a game application, a first picture and a second picture in the two game applications are both obtained through rendering, and phenomena of picture stretching and picture compression may exist. Therefore, correction needs to be performed based on the technical solution in embodiments of this application. When the first application is a game application and the second application is a non-game application, a second picture in the second application is not obtained through rendering. Therefore, phenomena of picture stretching and picture compression do not exist. Specifically, the electronic device adjusts the aspect ratio of the second window in response to the adjustment operation performed by the user on the first window, so that the second window has a target aspect ratio, and the aspect ratio of the second picture is the same as the target aspect ratio.

In this way, the electronic device displays the first window at the second aspect ratio different from the first aspect ratio.

For example, the first aspect ratio is 1620: 922, and the second aspect ratio is 1579: 1094.

In this case, the electronic device intercepts the first instruction sent by the first application to the libEGL. The first instruction may be one of open graphics library OpenGL instructions. The interception process of the electronic device is specifically implemented through a first function pointer list of a system library and a rendering instruction interception module.

The libEGL is located in a system library of an electronic device, which is configured to provide an interface between a rendering application interface (Application Programming Interface, API) (for example, OpenGL) and an underlying window system, and provide necessary functions required for creating and managing a context of an embedded system graphics library, querying available configuration, creating a rendering surface, and processing a context-related operation.

Under normal circumstances, a function pointer list in an OpenGL native mechanism is usually provided in an electronic device, which is referred to as a native function pointer list for short below. In the native function pointer list, function pointers all point to the libEGL. In this way, an instruction in the application sent to the libEGL can call a function in the libEGL, so that the libEGL executes a related function.

The first function pointer list libEGL-Functable in this embodiment of this application is different from the native function pointer list. The libEGL-Functable may include at least one first function pointer. The first function pointer points to the rendering instruction interception module.

The first function pointer may be a preset pointer in the first function pointer list that points to the rendering instruction interception module. The first function pointer points to the rendering instruction interception module, which essentially indirectly calls a function in the rendering instruction interception module.

In other words, the first function pointer list is replaced with a related function pointer corresponding to the first instruction in the native function pointer list, so that the function pointer pointing to the libEGL is replaced with the first function pointer pointing to the rendering instruction interception module.

During specific implementation, in a process in which the first application sends the first instruction to the libEGL, the first function pointer is triggered to call the function in the rendering instruction interception module, so that the rendering instruction interception module intercepts the first instruction.

In an implementation, step S101 may specifically include steps S1011-S1012.

Step S1011: The electronic device recognizes a current scene of a foreground page in response to the first operation performed by the user.

Step S1012: The electronic device displays the first window and a second window in the split-screen mode if the current scene is a split-screen scene, displays the first picture of the first application in the first window, and displays a second picture of a second application in the second window.

Steps S1011-S1012 may be implemented by the electronic device based on a scene recognition module in a framework layer.

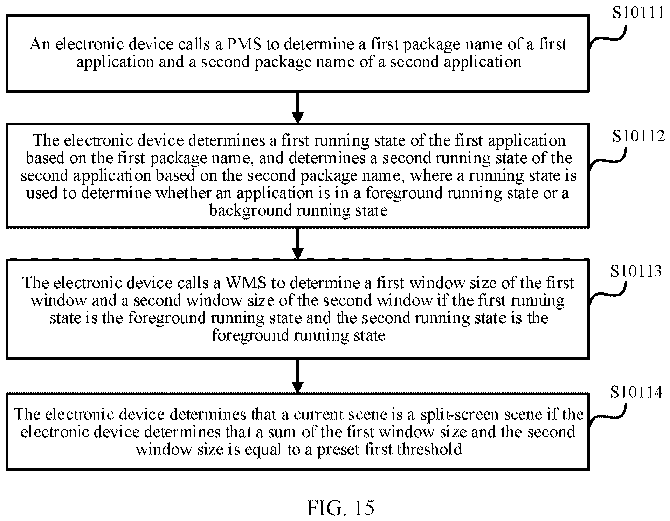

FIG. 15 is a third schematic flowchart of an application picture display method according to an embodiment of this application.

As shown in FIG. 15, step S1011 may include steps S10111-S10114.

Step S10111: The electronic device calls a PMS to determine a first package name of the first application and a second package name of the second application.

The PMS is usually configured for installation, update, and configuration management of a software package. The PMS can obtain a package name of an application from the software package.

Step S10112: The electronic device determines a first running state of the first application based on the first package name, and determines a second running state of the second application based on the second package name, where a running state is used to determine whether an application is in a foreground running state or a background running state.

The PMS may interact with monitoring tools in some operating systems, to obtain a running state of an application.

Step S10113: The electronic device calls a WMS to determine a first window size of the first window and a second window size of the second window if the first running state is the foreground running state and the second running state is the foreground running state.

The WMS may determine a width and a height of the first window by obtaining window coordinates of the first window, to determine the first window size. For example, the first window size is 1120×922. The second window size is 500×922.

Step S10114: The electronic device determines that the current scene is the split-screen scene if the electronic device determines that a sum of the first window size and the second window size is equal to a preset first threshold.

The first threshold is a display region size of a display screen. For example, the display region size is 1620×922. If the first window size is 1120×922, and the second window size is 500×922, the sum of the first window size and the second window size is equal to the display region size.

Specifically, the foregoing process is implemented based on the scene recognition module. The scene recognition module may determine the first running state of the first application corresponding to the first package name and determine the second running state of the second application corresponding to the second package name after obtaining the first package name and the second package name from the PMS, then obtain the first window size and the second window size from the WMS after determining that both the applications are running in the foreground, and recognize that the current scene is a split-screen scene after determining that the sum of the first window size and the second window size is equal to the preset first threshold.

In an implementation, the electronic device needs to meet a certain condition to intercept the first instruction sent by the first application to the libEGL. For example, the electronic device may intercept the first instruction sent by the first application to the libEGL after determining that the current scene is a split-screen scene.

It needs to be noted herein that the manner in which the electronic device recognizes the current scene in embodiments of this application is merely an example description. The electronic device may further determine that the current scene is a split-screen scene in another recognition manner. For example, the electronic device obtains a package name through an activity component manager ActivityManager, and monitors a life cycle event of the application through an ActivityLifecycleCallbacks interface to determine a foreground running state of the application. In this way, the electronic device may determine in another manner that two applications are running in the foreground, and further obtain window sizes of the two applications, to recognize the current scene. A specific manner that the electronic device recognizes the current scene is not limited in embodiments of this application.

In an implementation, the electronic device may further intercept the first instruction sent by the first application to the libEGL after determining that the current scene is a floating window scene in a multi-window scene. A specific recognition manner of the floating window scene is not described in detail in embodiments of this application.

Further, the electronic device is not only capable of intercepting the first instruction.

In fact, in step S102, the electronic device further displays the second window at a third aspect ratio. If the second application is the same type of application as the first application, the electronic device also intercepts a second instruction sent by the second application when intercepting the first instruction. This is because the second instruction may also be one of the OpenGL instructions. In a process in which the second application sends the second instruction to the libEGL, a second function pointer in the first function pointer list is triggered to call a function in the rendering instruction interception module. In this way, the rendering instruction interception module may intercept the second instruction.

The first function pointer and the second function pointer are merely used for distinguishing in a description process. The pointers are all preset pointers pointing to the rendering instruction interception module in the first function pointer list. Each application has a corresponding function pointer. Each function pointer is used to enable the rendering instruction interception module to intercept an instruction. In this way, the electronic device needs to distinguish different instructions to perform different operations on the different instructions.

Specifically, the electronic device may distinguish different instructions through a graphics context glContext function.

The glContext function is used to represent a graphics context (Graphics Context). The graphics context is used to manage and maintain a state and resources of graphic rendering. A rendering-related function can be called only after the glContext function is activated, and a specific manner for activation thereof depends on a system library or a framework layer used by the electronic device.

The first function pointer list includes a first glContext function and a second glContext function. The first glContext function corresponds to the first function pointer, and the second glContext function corresponds to the second function pointer.

In the process in which the electronic device intercepts the first instruction sent by the first application and intercepts the second instruction sent by the second application, when the electronic device determines that the current scene is the split-screen scene, the first application sends the first instruction to the first function pointer, and the second application sends the second instruction to the second function pointer, the electronic device activates the first glContext function to call the first function pointer, and activates the second glContext function to call the second function pointer. In this way, the electronic device controls the rendering instruction interception module to intercept the first instruction and the second instruction, and the electronic device may recognize whether the first instruction or the second instruction is currently intercepted. This embodiment of this application is usually applied to a game application. Based on characteristics of the game application, a user usually runs only one game application during screen splitting. Therefore, the following embodiments are further described through the embodiment involving interception of the first instruction. For a related processing manner of the second instruction, refer to that of the first instruction. Details are not described herein in embodiments of this application.

It should be further noted that the first instruction is actually a part of a first rendering instruction sent by the first application. The rendering instruction interception module intercepts only the first instruction, and other parts of the first rendering instruction are sent to the libEGL for processing in a conventional manner. Details are not described in embodiments of this application.

Step S103: The electronic device corrects a first instruction to generate a correction instruction, where the correction instruction is used to instruct the electronic device to intercept a first region from the first picture at a second aspect ratio.

The electronic device may correct the first instruction after intercepting the first instruction. The electronic device implements the correction of the first instruction based on a rendering ratio calibration module of the framework layer. The rendering instruction interception module intercepts the first instruction and then sends the first instruction to the rendering ratio calibration module, so that the rendering ratio calibration module processes the first instruction.

A conventional rendering process of an electronic device is described below.

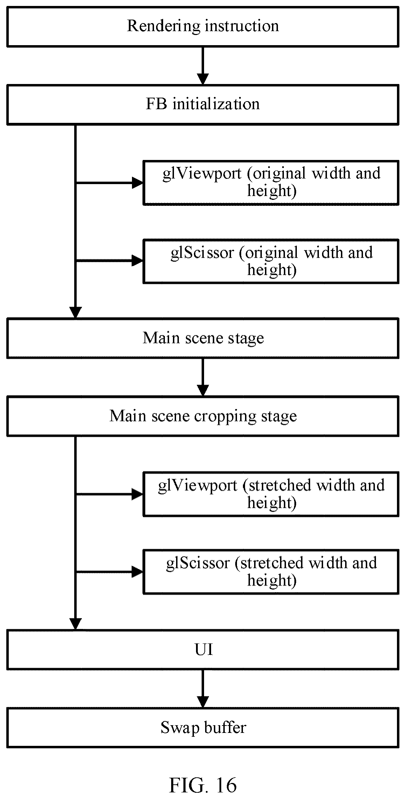

FIG. 16 is a schematic diagram of a conventional rendering process of an electronic device.

As shown in FIG. 16, an application sends a rendering instruction to the libEGL, and the libEGL receives the rendering instruction and performs initialization. A specific initialization sequence may include initializing a window system, creating a graphics context, initializing an OpenGL function pointer, and initializing a framebuffer (Framebuffer, FB). The FB initialization is implemented in an application layer code upon completion of initialization of the graphics context and the OpenGL function pointer. The FB has an original ratio between a width and a height of the frame buffer. During graphic rendering, the framebuffer is a portion of a memory for storing a rendering result. The width and the height of the framebuffer determine a size of a finally displayed image. The original ratio of the framebuffer represents an aspect ratio used during rendering. The original width and height of the framebuffer are recorded based on a glViewport function, and an original cropping ratio of the framebuffer is recorded based on a glScissor function.

The FB initialization is a step before rendering starts, and the FB may be configured to receive a rendering result after being initialized.

During rendering, the electronic device may enter a main scene stage. The main scene stage is a step in a graphic rendering pipeline, which is used to determine a part that can be visible in a view frustum of a camera, and perform subsequent processing. The main scene stage includes a main scene cropping stage. In the main scene cropping stage, the electronic device records a width and a height of a current frame through a glViewport function, and records a cropping ratio of the current frame through a glScissor function. In this way, the width and the height of the current frame may be a height and a width after stretching or compression.

The electronic device performs main scene drawing based on the width and the height of the current frame and the cropping ratio of the current frame.

The electronic device further performs UI drawing after performing the main scene drawing. The UI drawing may be, for example, drawing of a control on a page. Since the UI drawing is performed after the main scene drawing, the control usually does not deform.

After completing the UI drawing, the electronic device adds content in the FB to a buffer queue (BufferQueue) through a swap buffer (Swapbuffer), and enables the BufferQueue to interact with a system-level composer SurfaceFlinger, so that the SurfaceFlinger obtains a rendered picture and sends the rendered picture to a hardware composer for composition, and displays the composite on a display.

In this way, the width and the height of the current frame and the cropping ratio of the current frame may be different from the original width and height and the original cropping ratio, resulting in the occurrence of the phenomena such as picture stretching and picture compression.

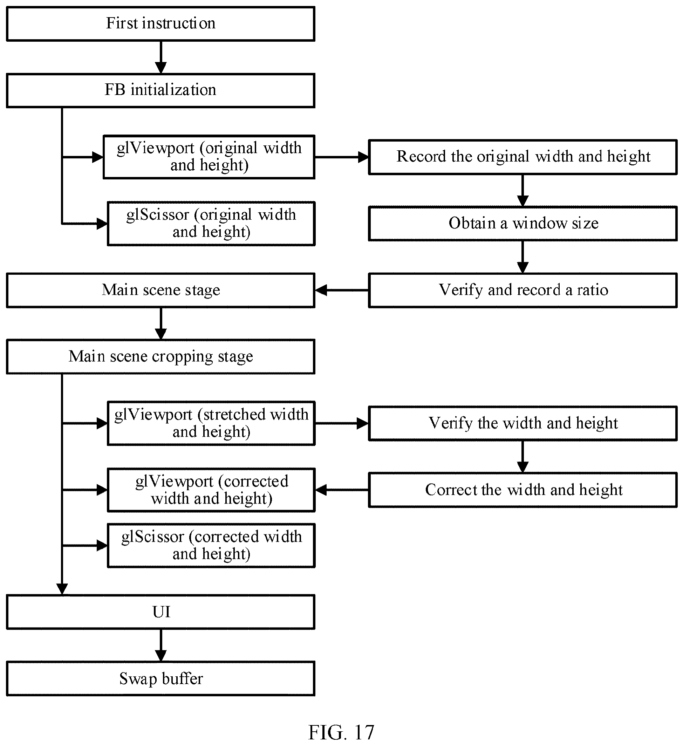

FIG. 17 is a schematic diagram of a rendering process of an electronic device according to an embodiment of this application.

As shown in FIG. 17, in this embodiment of this application, after the FB is initialized, the electronic device needs to perform ratio calibration when entering a main scene stage.

Specifically, this process is implemented through a rendering ratio calibration module. In this way, before correcting a first instruction, the rendering ratio calibration module first performs ratio calibration, to determine whether the first instruction needs to be corrected. This process is further implemented based on a window monitoring module in a system library of the electronic device.

During specific implementation, step S107 may be further included before step S103.

Step S107: The window monitoring module obtains a first window size from a WMS based on registration callback or periodic query, and sends the first window size to a rendering ratio calibration module.

The registration callback is a mechanism that allows custom code to be executed when a specific time occurs. When a callback function is registered, a pointer of the function is actually provided to a system library or a framework layer, so as to call the function when a certain event occurs.

In this way, the window monitoring module may send the first window size to the rendering ratio calibration module based on the registration callback function when an event of the first window size obtained from the WMS occurs. The first window size obtained from the WMS is a current first window size.

The window monitoring module may further periodically query the WMS for the first window size. The periodic query refers to a behavior of performing a repeated query operation at a certain time interval or regularly.

The periodic query may be implemented through a plurality of query instructions.

For example, the window monitoring module periodically queries the WMS through a getCurrentWindowMetrics query instruction.

In this way, the rendering ratio module can perform ratio calibration on the first instruction through the first window size.

The first instruction includes a glViewport function instruction and a glScissor function instruction. The glViewport function instruction is used to enable a first picture to have a second aspect ratio, and the glScissor function instruction is used to crop the first picture at a second aspect ratio.

Step S107 includes step S1071 to step S1073.

Step S1071: The electronic device obtains the second aspect ratio in the glViewport function instruction.

Step S1072: The electronic device determines whether the first aspect ratio is the same as the second aspect ratio.

If the first aspect ratio of the original width to the original height recorded in the FB is the same as the current aspect ratio (that is, the second aspect ratio) of the first window size, the electronic device does not need to correct the first instruction.

Step S1073: The electronic device performs the step of correcting the first instruction if the first aspect ratio is different from the second aspect ratio.

In other words, when the first aspect ratio of the original width to the original height recorded in the FB is different from the current aspect ratio of the first window size, the first instruction needs to be corrected, and the electronic device performs step S103.

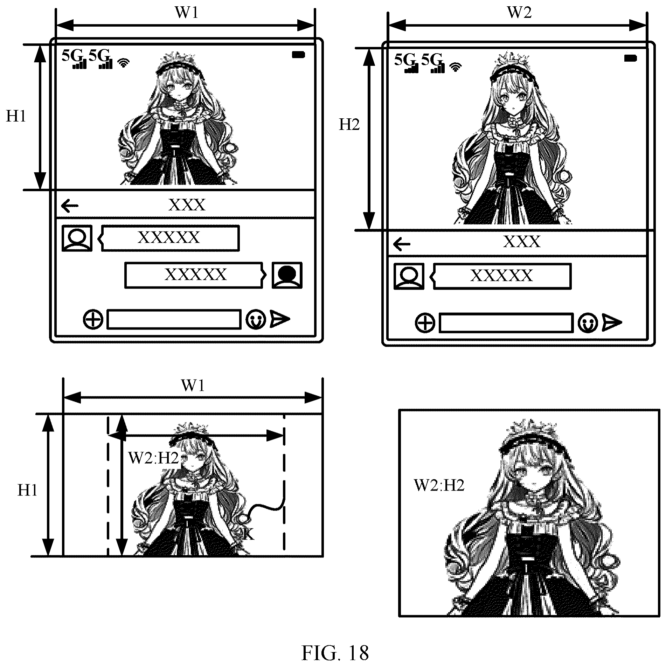

FIG. 18 is a schematic diagram of a first picture correction scene according to an embodiment of this application.

As shown in FIG. 18, step S103 includes steps S1031-S1033.

Step S1031: A rendering ratio calibration module determines a second aspect ratio based on a first window size.

Step S1032: The rendering ratio calibration module intercepts a first region in a first picture at the second aspect ratio.

For example, an original width of a first window is W1, an original height is H1, and a first aspect ratio is: W1: H1. A current height of the first window size is W2, a current width is H2, and a second aspect ratio is: W2: H2.

Step S1033: The rendering ratio calibration module corrects a glViewport function instruction and a glScissor function instruction, where the corrected glViewport function instruction is used to enable the first region to have the second aspect ratio, and the corrected glScissor function instruction is used to crop the first region at the second aspect ratio.

The electronic device intercepts a first region K in the first picture with the ratio of W1:H1 at the ratio of W2:H2, and crops the first region K at the ratio of W2: H2.

In this way, the electronic device can obtain a current width and a current height corresponding to the first region K. The first region K can cover the first window at the current width and the current height.

In this case, in the main scene cropping stage, the rendering ratio calibration module corrects the original width and height in the glViewport function to the current width and height of the first region.

Step S104: The electronic device controls the libEGL to execute a correction instruction.

After executing the correction instruction, the libEGL further needs to perform processes such as UI drawing, adding content in the FB to a buffer queue (BufferQueue) through a swap buffer (Swapbuffer), and enabling the BufferQueue to interact with a system-level composer SurfaceFlinger, so that the SurfaceFlinger obtains a rendered picture and sends the rendered picture to a hardware composer for composition, and displays the composite on a display. Details are not described in embodiments of this application.

Step S105: The electronic device displays the first region in the first window in equal proportion.

In this way, the first region displayed by the electronic device enables the user to have a normal visual perception.

According to the application picture display method in an embodiment of this application, when the electronic device displays the first window in the split-screen mode or displays the first window in the floating window mode, a problem of phenomena such as picture stretching and picture compression that occur when a user adjusts a window display ratio may be resolved.

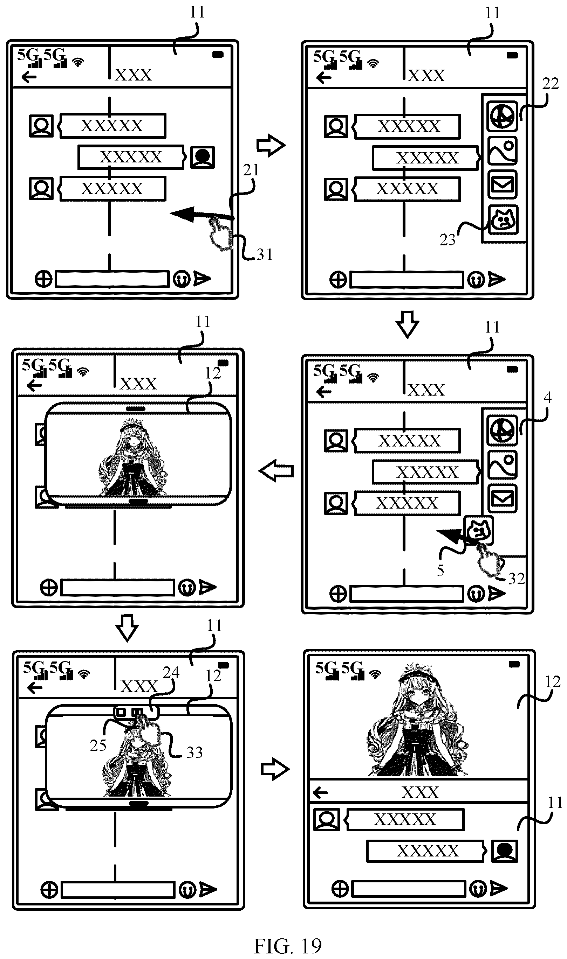

FIG. 19 is a first schematic interaction diagram of an application picture display method according to an embodiment of this application.

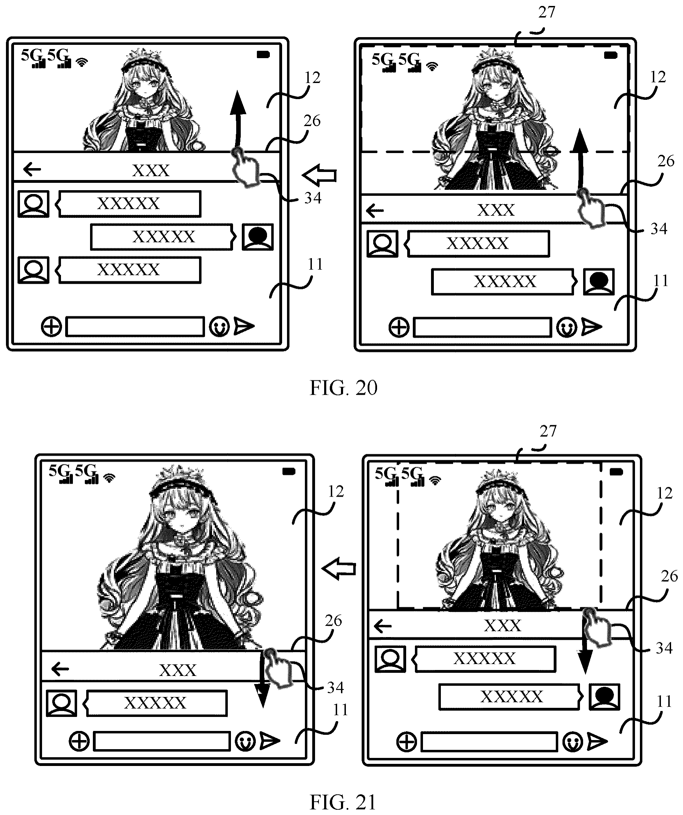

FIG. 20 is a second schematic interaction diagram of an application picture display method according to an embodiment of this application.

FIG. 21 is a second schematic interaction diagram of an application picture display method according to an embodiment of this application.

An interactive process of the application picture display method provided in embodiments of this application is described through examples with reference to FIG. 19, FIG. 20, and FIG. 21 below.

As shown in FIG. 19, during use of a non-game application by a user, the electronic device may display a window 11 of the non-game application in a full-screen or non-full-screen mode.

In this case, if a game application is to be opened, a sliding operation 31 may be performed from a screen edge 21 of the electronic device to an inner side of the screen.

The electronic device may display a first application bar 22 in response to the sliding operation 31 performed by the user. The first application bar 22 may include icons of one or more applications, for example, may include an icon 23 of a game application. The icons may be preset by the electronic device or the user, or may be determined by the electronic device based on information such as a frequency of use of the application by the user.

The user may click the icon 23 of a game application 32 in the first application bar 22 to start the game application.

After starting the game application, the electronic device may display the window 12 of the game application above the window 11 of the non-game application in a floating window mode, and display an interactive object 24 for triggering a split-screen operation on the top of the window 12 of the game application.

In this case, if the user wants to display the game application and the non-game application in a split-screen mode, the user may perform an operation such as a clicking on the interactive object 24 on the top of the window 12 of the game application, so that a split-screen button 25 is displayed in the interactive object. The split-screen button may include a left-right split-screen button and a top-bottom split-screen button.

The electronic device may display the window 12 of the game application and the window 11 of the non-game application in a split-screen mode in response to a click operation 33 performed by the user on the split-screen button 25.

For example, if the user clicks the top-bottom split-screen button, the electronic device may display the window 12 of the game application and the window 11 of the non-game application in the top-bottom split-screen mode. For example: the window 12 of the game application is displayed on an upper half part of a screen, and the window 11 of the non-game application is displayed on a lower half part of the screen.

For example, if the user clicks the left-right split-screen button, the electronic device may display the window 12 of the game application and the window 11 of the non-game application in the left-right split-screen mode. For example: the window 12 of the game application is displayed on a left half part of a screen, and the window 11 of the non-game application is displayed on a right half part of the screen.

In addition, the electronic device may further display a split-screen boundary element 26 between the window 12 of the game application and the window 11 of the non-game application. The split-screen boundary element 26 may be, for example, an interactive bar element that has a certain width.

Next, as shown in FIG. 20 or FIG. 21, if the user wants to adjust a size of the window 12 of the game application, a dragging operation 34 may be performed on the split-screen boundary element 26. The electronic device may change the size of the window 12 of the game application along a dragging direction of the user in response to a dragging operation 34 performed by the user on the split-screen boundary element 26, so as to change an aspect ratio of the window 12 of the game application.

For example, as shown in FIG. 20, an example in which the electronic device displays the window 12 of the game application and the window 11 of the non-game application in the top-bottom split-screen mode, the window 12 of the game application is displayed on the upper half part of the screen, and the window 11 of the non-game application is displayed on the lower half part of the screen is used. If the user drags the split-screen boundary element 26 upward, the electronic device moves upward to decrease a height of the window 12 of the game application, so that the aspect ratio of the window 12 of the game application is increased. Meanwhile, the electronic device may intercept, based on the adjusted aspect ratio of the window 12 of the game application, a target picture 27 from a game picture displayed in the window 12 of the game application before the adjustment, and display the target picture in the adjusted window 12 of the game application.

For example, as shown in FIG. 21, an example in which the electronic device displays the window 12 of the game application and the window 11 of the non-game application in the top-bottom split-screen mode, the window 12 of the game application is displayed on the upper half part of the screen, and the window 11 of the non-game application is displayed on the lower half part of the screen is used. If the user drags the split-screen boundary element downward, the electronic device moves downward to increase the height of the window 12 of the game application, so that the aspect ratio of the window 12 of the game application is decreased. Meanwhile, the electronic device may intercept, based on the adjusted aspect ratio of the window 12 of the game application, a target picture 27 from a game picture displayed in the window 12 of the game application before the adjustment, and display the target picture in the adjusted window 12 of the game application.

In this way, the target picture can be filled and displayed in the adjusted window of the game application without any proportional change such as stretching or compressing, thereby improving user experience.

The solutions provided in embodiments of this application are described above mainly from the perspective of the electronic device. It may be understood that to implement the foregoing functions, the electronic device includes a corresponding hardware structure and/or software module for performing each function. A person skilled in the art can easily realize that the steps of the application picture display method in all of the examples described in combination with embodiments disclosed in this application can be implemented in a form of hardware or a combination of hardware and computer software in this application. Whether a function is performed by hardware or hardware driven by software of the electronic device depends on a particular application and a design constraint condition of the technical solutions. A person skilled in the art may use different methods to implement the described functions for each particular application, but it is not to be considered that the implementation goes beyond the scope of this application.

In embodiments of this application, the electronic device may be divided into functional modules or functional units based on the foregoing method examples. For example, each functional module or functional unit may be obtained through division for each corresponding function, or two or more functions may be integrated into one processing module. The foregoing integrated module may be implemented in the form of hardware, or may be implemented in a form of a software functional module or a functional unit. In embodiments of this application, the division of modules or units is merely an example, and is merely logical function division, and additional division manners may exist during actual implementation.

An embodiment of this application further provides an application picture display apparatus. The application picture display apparatus may include:
a display module, where the display module is configured to: display a first window in response to a first operation performed by a user, and display a first picture of a first application in the first window, where the first window has a preset first aspect ratio, the first aspect ratio is a ratio of a width to a height of a visible region of the first window, and the first window is a window in a split-screen mode or a window in a floating window mode; and display the first window at a second aspect ratio in response to an adjustment operation performed by the user on the first aspect ratio;
a graphics processing libEGL module, where the libEGL module is configured to render the first picture;
a rendering instruction interception module, where the rendering instruction interception module is configured to intercept a first instruction sent by the first application to the libEGL module, the first instruction is used to instruct the libEGL module to stretch or compress the first picture, so that the first picture has a second aspect ratio, and the second aspect ratio is different from the first aspect ratio; and
a rendering ratio calibration module, where the rendering ratio calibration module is configured to correct the first instruction to generate a correction instruction, and the correction instruction is used to instruct the libEGL module to intercept a first region in the first picture at the second aspect ratio.

The libEGL module is further configured to execute the correction instruction.

The display module is further configured to display the first region in the first window in equal proportion.

In an implementation, the apparatus further includes:
a scene recognition module, where the scene recognition module is configured to recognize a current scene of a foreground page, the current scene includes a split-screen scene, and in the split-screen scene, a display module displays a first window and a second window in a split-screen mode, displays the first picture of the first application in the first window, and displays the second picture of the second application in the second window.

In an implementation, the apparatus further includes:
a package manager service PMS module, where the PMS module is configured to determine a first package name of the first application and a second package name of the second application; and determine a first running state of the first application based on the first package name, and determine a second running state of the second application based on the second package name, where a running state is used to determine whether an application is in a foreground running state or a background running state; and
a window manager service WMS module, where the WMS module is configured to determine a first window size of the first window and a second window size of the second window if the first running state is the foreground running state and the second running state is the foreground running state.

The scene recognition module is further configured to determine that the current scene is a split-screen scene when a sum of the first window size and the second window size is equal to a preset first threshold.

In an implementation, the libEGL module is further configured to set a first function pointer list. The first function pointer list includes a first function pointer, the first function pointer points to the rendering instruction interception module, the first function pointer is used to enable the rendering instruction interception module to intercept a first instruction, and the first instruction is one of open graphics library OpenGL instructions.

The rendering instruction interception module is further configured to, if the scene recognition module determines that the current scene is the split-screen scene, intercept the first instruction when the first application sends the first instruction to the first function pointer.

In an implementation, the first function pointer list further includes a second function pointer. The second function pointer points to the rendering instruction interception module, the second function pointer is used to enable the rendering instruction interception module to intercept a second instruction, and the second instruction is one of the OpenGL instructions.

The rendering instruction interception module is further configured to, if the scene recognition module determines that the current scene is the split-screen scene, intercept the second instruction when the second application sends the second instruction to the second function pointer.

In an implementation, the first function pointer list includes a first graphics context glContext function and a second glContext function, the first glContext function corresponds to the first function pointer, the second glContext function corresponds to the second function pointer, and the second function pointer is used to enable the rendering instruction interception module to intercept the second instruction.

The libEGL module is further configured to activate the first glContext function to call the first function pointer, and activate the second glContext function to call the second function pointer if the current scene is the split-screen scene, the first application sends the first instruction to the first function pointer, and the second application sends the second instruction to the second function pointer. The rendering instruction interception module is further configured to intercept the first instruction and the second instruction. Through this implementation, a specific manner in which the application picture display apparatus intercepts and sends the first instruction to correct the first instruction is shown. In this way, the application picture display apparatus can resolve the problem of phenomena such as picture stretching and picture compression that occur in the split-screen scene.

In an implementation, the apparatus further includes:
a window monitoring module, where the window monitoring module is configured to obtain the first window size from the WMS module based on registration callback or periodic query, and send the first window size to the rendering ratio calibration module.

In an implementation, the rendering instruction interception module is further configured to send the first instruction to the rendering ratio calibration module.

In an implementation, the first instruction includes a viewport glViewport function instruction and a cropping glScissor function instruction, the glViewport function instruction is used to enable the first picture to have the second aspect ratio, and the glScissor function instruction is used to crop the first picture at the second aspect ratio.

The rendering ratio calibration module is further configured to: obtain the second aspect ratio in the glViewport function instruction; determine whether the first aspect ratio is the same as the second aspect ratio; and correct the first instruction if the first aspect ratio is different from the second aspect ratio.

In an implementation, the rendering ratio calibration module is further configured to: determine the second aspect ratio based on the first window size; intercept the first region in the first picture at the second aspect ratio; and correct the glViewport function instruction and the glScissor function instruction, where the corrected glViewport function instruction is used to enable the first region to have the second aspect ratio, and the corrected glScissor function instruction is used to crop the first region at the second aspect ratio.

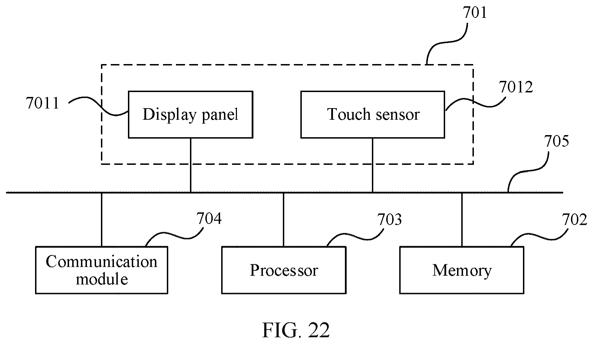

FIG. 22 is a schematic structural diagram of an application picture display apparatus according to an embodiment of this application.

As shown in FIG. 22, in an embodiment, the electronic device may implement a corresponding function through a hardware apparatus shown in FIG. 22. The apparatus may include a touch screen 701, a memory 702, a processor 703, and a communication module 704. The foregoing devices may be connected through one or more communication buses 705. The foregoing devices may be connected through one or more communication buses 705. The touch screen 701 may include a display panel 7011 and a touch sensor 7012. The display panel 7011 is configured to display an image. The touch sensor 7012 may transfer a detected touch operation to an application processor, to determine a touch event type, and provide a visual output related to the touch operation through the display panel 7011. The processor 703 may include one or more processing units. For example, the processor 703 may include an application processor, a modem processor, a graphics processor, an image signal processor, a controller, a video codec, a digital signal processor, a baseband processor, a neural network processor, and/or the like. Different processing units may be independent devices, or may be integrated into one or more processors. The memory 702 is coupled to the processor 703, and is configured to store various software programs and/or computer instructions. The memory 702 may include a volatile memory and/or a nonvolatile memory. When the processor executes the computer instruction, the electronic device may perform various functions or steps in the foregoing method embodiments.

In an embodiment, the touch screen 701 may include a display panel 7011 and a touch sensor 7012. The display panel 7011 is configured to display an image. The touch sensor 7012 may transfer a detected touch operation to an application processor, to determine a touch event type, and provide a visual output related to the touch operation through the display panel 7011. The processor 703 may include one or more processing units. For example, the processor 703 may include an application processor, a modem processor, a graphics processor, an image signal processor, a controller, a video codec, a digital signal processor, a baseband processor, a neural network processor, and/or the like. Different processing units may be independent devices, or may be integrated into one or more processors. The memory 702 is coupled to the processor 703, and is configured to store various software programs, capacity data, and the like. The memory 702 may include a volatile memory and/or a nonvolatile memory.

When executed by the processor 703, the software program and/or a plurality of groups of instructions in the memory 702 cause the electronic device to implement the following method steps: The electronic device displays a first window in response to a first operation performed by a user, and displays a first picture of a first application in the first window, where the first window has a preset first aspect ratio, the first aspect ratio is a ratio of a width to a height of a visible region of the first window, and the first window is a window in a split-screen mode or a window in a floating window mode. The electronic device displays the first window at the second aspect ratio in response to an adjustment operation performed by the user on the first aspect ratio, and intercepts a first instruction sent by the first application to a graphics library libEGL, where the libEGL is located in a system library of the electronic device, the first instruction is used to instruct the electronic device to stretch or compress the first picture, so that the first picture has the second aspect ratio, and the second aspect ratio is different from the first aspect ratio. The electronic device corrects a first instruction to generate a correction instruction, where the correction instruction is used to instruct the electronic device to intercept a first region from the first picture at a second aspect ratio. The electronic device controls the libEGL to execute the correction instruction. The electronic device displays the first region in the first window in equal proportion.

This application further provides an electronic device, including: a processor, a memory, and a touch screen. The memory stores a program instruction. When the program instruction is executed by the processor, the electronic device is enabled to perform the application picture display method according to any one of the implementations of the foregoing embodiments.

An embodiment of this application further provides a chip system. The chip system includes at least one processor and at least one interface circuit. The processor may be interconnected to the interface circuit through a line. For example, the interface circuit may be configured to receive a signal from another apparatus (such as a memory of an electronic device). For another example, the interface circuit may be configured to send a signal to another apparatus. For example, the interface circuit may read an instruction stored in the memory and send the instruction to the processor. When the instruction is executed by the processor, the electronic device may be enabled to perform the steps in the foregoing embodiments. Certainly, the chip system may further include another discrete device. This is not specifically limited in this embodiment of this application.

An embodiment of this application further provides a computer-readable storage medium. The computer-readable storage medium includes a computer instruction, the computer instruction, when run on the electronic device, causing the electronic device to perform the functions or steps performed by the mobile phone in the method embodiments.

An embodiment of this application further provides a computer program product. When the computer program product is run on a computer, the computer is enabled to perform the functions or steps performed by the mobile phone in the method embodiments.

Through the descriptions of the foregoing implementations, a person skilled in the art may clearly understand that, for the purpose of convenient and brief description, only division of the foregoing functional modules is used as an example for description. In an actual application, the foregoing functions may be allocated to and completed by different functional modules as required. In other words, an internal structure of an apparatus is divided into different functional modules to complete all or some of the functions described above.

In the several embodiments provided in this application, it should be understood that the disclosed apparatus and method may be implemented in other manners. For example, the described apparatus embodiment is merely an example. For example, the module or unit division is merely logical function division and may be another division in actual implementation. For example, a plurality of units or components may be combined or integrated into another apparatus, or some features may be ignored or not performed. In addition, the displayed or discussed mutual coupling or direct coupling or communication connection may be implemented through some interfaces. The indirect coupling or communication connection between the apparatuses or units may be implemented in electronic, mechanical, or other forms.

The units described as separate parts may or may not be physically separated. A part displayed as a unit may be one physical unit or a plurality of physical units, located at the one position, or may be distributed to different positions. Some or all of the units may be selected according to actual needs to achieve the objectives of the solutions of embodiments.

In addition, functional units in embodiments of this application may be integrated into one processing unit, each of the units may exist alone physically, or two or more units are integrated into one unit. The foregoing integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the prior art, or all or some of the technical solutions may be implemented in a form of a software product. The software product is stored in a storage medium and includes instructions for enabling a device (which may be a single-chip microcomputer, a chip, or the like) or a processor (processor) to perform all or some of the steps of the methods described in embodiments of this application. The foregoing storage medium includes: any medium that may store program code, such as a USB flash drive, a removable hard disk, a read only memory (read only memory, ROM), a random access memory (random access memory, RAM), a magnetic disk, or a compact disc.

The foregoing content is merely specific implementations of this application, but the protection scope of this application is not limited thereto. Any variation or replacement made within the technical scope disclosed in this application shall fall within the protection scope of this application. Therefore, the protection scope of this application shall be subject to the protection scope of the claims.

## Claims

1. An application picture display method, applied to an electronic device, comprising:
displaying, by the electronic device, a first window in response to a first operation performed by a user, and displaying a first picture of a first application in the first window, wherein the first picture is obtained by rendering, the first window has a preset first aspect ratio, the first aspect ratio is a ratio of a width to a height of a visible region of the first window, and the first window is a window in a split-screen mode or a window in a floating window mode; and
displaying, by the electronic device, the first window at a second aspect ratio in response to an adjustment operation performed by the user on the first window, determining, from the first picture, a target picture having the second aspect ratio, and displaying the target picture in the first window, wherein the second aspect ratio is different from the first aspect ratio.

2. The application picture display method according to claim 1, wherein the displaying, by the electronic device, the first window at a second aspect ratio in response to an adjustment operation performed by the user on the first window, determining, from the first picture, a target picture corresponding to the second aspect ratio, and displaying the target picture in the first window comprises:
displaying, by the electronic device, the first window at the second aspect ratio in response to an adjustment operation performed by the user on the first window, and intercepting a first instruction sent by the first application to a graphics library libEGL, wherein the libEGL is located in a system library of the electronic device, the first instruction is used to instruct the electronic device to stretch or compress the first picture, so that the first picture has the second aspect ratio, and the second aspect ratio is different from the first aspect ratio;
correcting, by the electronic device, the first instruction, to generate a correction instruction, wherein the correction instruction is used to instruct the electronic device to intercept the target picture from the first picture at the second aspect ratio;
controlling, by the electronic device, the libEGL to execute the correction instruction; and
displaying, by the electronic device, the target picture in the first window.

3. The application picture display method according to claim 1 or 2, wherein the displaying, by the electronic device, a first window in response to a first operation performed by a user, and displaying a first picture of a first application in the first window comprise:
recognizing, by the electronic device, a current scene of a foreground page in response to the first operation performed by the user; and
displaying, by the electronic device, the first window and a second window in the split-screen mode if the current scene is a split-screen scene, displaying the first picture of the first application in the first window, and displaying a second picture of a second application in the second window.

4. The application picture display method according to claim 3, wherein the first application is a game application, and the second application is any one of a game application, a social application, a music application, a video application, a communication application, a productivity application, a news application, a reading application, a health application, an education application, and a tool application.

5. The application picture display method according to claim 4, wherein
when the first application is the game application, and the second application is a non-game application, the second picture is not obtained by rendering; and the displaying, by the electronic device, the first window at a second aspect ratio in response to an adjustment operation performed by the user on the first window comprises:
adjusting, by the electronic device, an aspect ratio of the second window in response to the adjustment operation performed by the user on the first window, so that the second window has a target aspect ratio, and the aspect ratio of the second picture is the same as the target aspect ratio.

6. The application picture display method according to claim 3, wherein the recognizing, by the electronic device, a current scene of a foreground page comprises:
calling, by the electronic device, a package manager service PMS to determine a first package name of the first application and a second package name of the second application;
determining, by the electronic device, a first running state of the first application based on the first package name, and determining a second running state of the second application based on the second package name, wherein a running state is used to determine whether an application is in a foreground running state or a background running state;
calling, by the electronic device, a window manager service WMS to determine a first window size of the first window and a second window size of the second window if the first running state is the foreground running state and the second running state is the foreground running state; and
determining, by the electronic device, that the current scene is the split-screen scene if the electronic device determines that a sum of the first window size and the second window size is equal to a preset first threshold.

7. The application picture display method according to claim 6, wherein a framework layer of the electronic device comprises a rendering instruction interception module and a first function pointer list, the first function pointer list comprises a first function pointer, the first function pointer points to the rendering instruction interception module, the first function pointer is used to enable the rendering instruction interception module to intercept a first instruction, and the first instruction is one of open graphics library OpenGL instructions; and
the displaying, by the electronic device, the first window at a second aspect ratio in response to an adjustment operation performed by the user on the first aspect ratio, and intercepting the first instruction sent by the first application to the libEGL comprise:
controlling, by the electronic device, the first application to send the first instruction to the first function pointer if the electronic device determines that the current scene is the split-screen scene; and
controlling, by the electronic device, the rendering instruction interception module to intercept the first instruction.

8. The application picture display method according to claim 7, wherein the displaying, by the electronic device, the first window at a second aspect ratio in response to an adjustment operation performed by the user on the first aspect ratio, and intercepting the first instruction sent by the first application comprise:
displaying, by the electronic device, the first window at the second aspect ratio in response to the adjustment operation performed by the user on the first aspect ratio, displaying the second window at a third aspect ratio, intercepting the first instruction sent by the first application, and intercepting a second instruction sent by the second application, wherein the second instruction is one of the OpenGL instructions.

9. The application picture display method according to claim 8, wherein the first function pointer list comprises a first graphics context glContext function and a second glContext function, the first glContext function corresponds to the first function pointer, the second glContext function corresponds to the second function pointer, and the second function pointer is used to enable the rendering instruction interception module to intercept the second instruction; and
the intercepting, by the electronic device, the first instruction sent by the first application, and intercepting the second instruction sent by the second application comprises:
controlling, by the electronic device if the electronic device determines that the current scene is the split-screen scene, the first application to send the first instruction to the first function pointer, and controlling the second application to send the second instruction to the second function pointer;
activating, by the electronic device, the first glContext function to call the first function pointer, and activating the second glContext function to call the second function pointer; and
controlling, by the electronic device, the rendering instruction interception module to intercept the first instruction and the second instruction.

10. The application picture display method according to claim 7, wherein the framework layer of the electronic device further comprises a window monitoring module and a rendering ratio calibration module; and
before the electronic device corrects the first instruction, the method further comprises:
obtaining, by the window monitoring module, the first window size from the WMS based on registration callback or periodic query; and
sending, by the window monitoring module, the first window size to the rendering ratio calibration module.

11. The application picture display method according to claim 10, wherein before the electronic device corrects the first instruction, the method further comprises:
sending, by the rendering instruction interception module, the first instruction to the rendering ratio calibration module.

12. The application picture display method according to claim 11, wherein the first instruction comprises a viewport glViewport function instruction and a cropping glScissor function instruction, the glViewport function instruction is used to enable the first picture to have the second aspect ratio, and the glScissor function instruction is used to crop the first picture at the second aspect ratio; and
before the electronic device corrects the first instruction, the method further comprises:
obtaining, by the electronic device, the second aspect ratio in the glViewport function instruction;
determining, by the electronic device, whether the first aspect ratio is the same as the second aspect ratio; and
performing, by the electronic device, the step of correcting the first instruction if the first aspect ratio is different from the second aspect ratio.

13. The application picture display method according to claim 12, wherein the correcting, by the electronic device, the first instruction comprises:
determining, by the rendering ratio calibration module, the second aspect ratio based on the first window size;
intercepting, by the rendering ratio calibration module, a first region in the first picture at the second aspect ratio; and
correcting, by the rendering ratio calibration module, the glViewport function instruction and the glScissor function instruction, wherein the corrected glViewport function instruction is used to enable the first region to have the second aspect ratio, and the corrected glScissor function instruction is used to crop the first region at the second aspect ratio.

14. An electronic device, comprising: a processor and a memory, wherein the memory stores a program instruction, and the program instruction, when executed by the processor, causes the electronic device to perform the application picture display method according to any one of claims 1 to 13.

15. A computer-readable storage medium, storing an instruction, wherein the instruction, when run on an electronic device, causes the electronic device to perform the application picture display method according to any one of claims 1 to 13.

16. A computer program product, wherein the computer program product, when run on an electronic device, causes the electronic device to perform the application picture display method according to any one of claims 1 to 13.
